# EUROPÄISCHE PATENTANMELDUNG

(11) **EP 4 835 846 A2**
(43) Veröffentlichungstag der Anmeldung: **04.11.2026**
(21) Anmeldenummer: 26200001.1
(22) Anmeldetag: 05.11.2019
(51) Int. Cl.: G06V 20/68

(54) **VERFAHREN ZUR REGELUNG DES BETRIEBS EINER MASCHINE ZUM ERNTEN VON HACKFRÜCHTEN**

(30) Priorität: 07.11.2018 DE 102018127845
(62) Dokumentnummer(n) der früheren Anmeldung(en) nach Art. 76 EPÜ: 19808699.3 / 3 877 903
(71) Anmelder: Grimme Landmaschinenfabrik SE & Co. KG, 49401 Damme (DE)
(72) Erfinder: Strothmann, Dr., Wolfram, 49078 Osnabruck (DE); Bösenberg, Daniel, 48282 Emsdetten (DE)
(74) Vertreter: Wischmeyer, André

(57) **Zusammenfassung**

Verfahren zur Regelung des Betriebs einer Maschine (2) zum Ernten von Hackfrüchten (4) und/oder zum Trennen von Hackfrüchten (4) von weiterem Erntegut umfassend Beimengen, bei dem durch mindestens eine optische Bilderfassungseinheit (6) zumindest ein Prüfbild (8) von zumindest einem mittels zumindest eines Förderelementes (10,10A,10B,10C,10D,10E,10F,10K, 10T) relativ zu einem Maschinenrahmen (12) fortbewegten Teil des Erntegutes aufgenommen wird, wobei eine Auswertevorrichtung auf Basis eines anhand des Prüfbildes (8) erzeugten oder durch dieses ausgebildeten Prüfdatensatzes ein Trenngeräteeinstellsignal zur Einstellung zumindest eines Betriebsparameters eines Trenngerätes der Maschine (2) erzeugt, sowie die vorbezeichnete Maschine.

## Beschreibung

Die Erfindung betrifft ein Verfahren zur Regelung des Betriebs einer Maschine zum Ernten von Hackfrüchten und/oder zum Trennen von Hackfrüchten von weiterem Erntegut sowie die Maschine. Bei dem Verfahren wird durch mindestens eine optische Bilderfassungseinheit zumindest ein Prüfbild von zumindest einem mittels zumindest eines Förderelementes relativ zu einem Maschinenrahmen fortbewegten Teil des Erntegutes aufgenommen.

Das Prüfbild zeigt Erntegut, welches zuvor durch die Maschine zum Ernten von Hackfrüchten aufgenommen oder dieser aufgegeben wurde. Das Förderelement als Teil der Maschine dient dabei der Fortbewegung des Erntegutes innerhalb der Maschine, wobei zumindest ein Teil des Erntegutes dabei unmittelbar Kontakt zum Förderelement hat.

Die Offenlegungsschrift US 2018/0047177 A1 offenbart ein Verfahren, bei dem ein aufgenommenes Prüfbild benutzt wird, um eine Geschwindigkeit des Förderelementes zu berechnen. Auf Basis der berechneten Geschwindigkeit wird die tatsächliche Geschwindigkeit des Förderelementes anschließend angepasst.

Nachteilig bei den bekannten, gattungsgemäßen Verfahren ist, dass es je nach Erntebedingungen zu signifikanten Beschädigungen der Hackfrüchte oder zu einer großen Menge an Beimengen unter von der Maschine abgeladenen Hackfrüchten kommt. Ergänzend wird daher in der US 2018/0047177 A1 allgemein vorgeschlagen, in Abhängigkeit einer Server-basierten Auswertung von durch die Sensoren der Maschine aufgenommenen dreidimensionalen Daten des Erntegutes, die Ernterate oder ein oder mehrere Konfigurationen der Maschine zu ändern.

Aufgabe der vorliegenden Erfindung ist die Bereitstellung eines Verfahrens, bei dem die Schonung der Hackfrüchte verbessert ist, wobei ein möglichst großer Anteil von Beimengen von den Hackfrüchten getrennt wird.

Erfindungsgemäß wird die Aufgabe durch ein gattungsgemäßes Verfahren gelöst, bei dem die Auswertevorrichtung auf Basis eines anhand des Prüfbildes erzeugten oder durch dieses ausgebildeten Prüfdatensatzes ein Trenngeräteeinstellsignal zur Einstellung zumindest eines Betriebsparameters eines Trenngerätes der Maschine erzeugt.

Die Maschine ist ein im Betrieb selbstfahrendes oder gezogenes Fahrzeug zum Ernten von Hackfrüchten, insbesondere von Kartoffeln, Rüben, Karotten oder Chicorée. Während der Ausführung des Verfahrens wird die Maschine insbesondere in Richtung von Reihen, insbesondere Pflanzdämmen der zu erntenden Hackfrüchte fortbewegt und diese als Teil des Erntegutes in einem kontinuierlichen Prozess vom Erdboden aufgenommen. Nach dem Aufnehmen des Erntegutes wird zumindest ein Teil des Erntegutes, insbesondere Hackfrüchte und/oder Beimengen, zumindest teilweise von dem zumindest einen Förderelement relativ zum Maschinenrahmen der Maschine fortbewegt. Insbesondere ist das Förderelement umlaufend und als Förderband, bevorzugt als Siebband, oder als rotierender Siebstern ausgebildet.

Alternativ kann es sich bei der Maschine auch um eine Maschine zum Trennen von Hackfrüchten von Beimengen des Ernteguts, z.B. von Kluten, Steinen oder Erde, handeln.

Das Trenngerät ist mit etwaig einzeln einstellbaren Trennelementen Teil der Maschine und wirkt dabei bevorzugt mit einem oder mehreren Förderelementen zusammen. Alternativ ist das Trenngerät Teil des Förderelements, wird von diesem zumindest mitausgebildet (z.B. bei mit Rüttelvorrichtungen versehenen Siebbändern) oder bildet das eine oder mehrere Förderelemente mit aus (z.B. bei Walzenenterdern). Im Betrieb wird durch eine Bewegung des Erntegutes relativ zum Trenngerät ein Bewegungsimpuls auf zumindest einen Bestandteil des Erntegutes, insbesondere auf die Hackfrüchte oder auf die Beimengen, ausgeübt. Das Trenngerät ist beispielswiese in Form eines Walzenenterders insbesondere mit umlaufenden Trennelementen in Form von Walzen versehen, wobei unterschiedliche Bestandteile des Erntegutes von dem Trenngerät zumindest nicht in die gleiche Richtung bewegt werden.

Die optische Bilderfassungseinheit ist insbesondere oberhalb des Förderelementes ortsfest an der Maschine angeordnet und auf das Förderelement und somit im Betrieb auf einen Strom von zwischen der Bilderfassungseinheit und dem Förderelement befindlichen Erntegut oder einem Bestandteil davon, insbesondere Hackfrüchten oder Beimengen, gerichtet. Das erfindungsgemäße Verfahren wird insbesondere während des Erntens bzw. Trennens mit der Maschine ausgeführt und wiederholt sich dabei vorzugsweise.

Das Prüfbild ist insbesondere eine mehrdimensionale, vorzugsweise zweidimensionale, Abbildung, auf der zumindest ein Teil des Erntegutes mit Hackfrüchten, Beimengen und/oder das Förderelement abgebildet wird. Auf Grundlage des von der Bilderfassungseinheit aufgenommenen Prüfbildes wird der Prüfdatensatz entweder bereits durch die Bilderfassungseinheit oder durch die Auswertevorrichtung erzeugt. Alternativ kann der Prüfdatensatz durch das Prüfbild selbst ausgebildet sein. Dies gilt insbesondere für Bilderfassungseinheiten, deren Prüfbilder bereits ein für die anschließende Analyse in der Auswertevorrichtung passendes Format besitzen. Der Prüfdatensatz ist insbesondere ein durch Bearbeitung, zum Beispiel Filterung und/oder andere Abbildungen, geschaffene, zumindest temporär im System vorliegender Datensatz, dessen Informationen, z.B. Farbinformationen in Form von einem oder mehreren Farbwerten, in der Auswertevorrichtung ausgewertet werden. Er kann z.B. als Bilddatei, Tabelle, Matrix oder Vektorfeld vorliegen. Das Prüfbild oder der bereits in der Bilderfassungseinheit geschaffene Prüfdatensatz wird von der Bilderfassungseinheit an die Auswertevorrichtung übertragen. Die optische Bilderfassungseinheit ist insbesondere als digitale Foto- oder Videokamera zur zweidimensionalen Aufnahme des Prüfbildes oder als Zeilenkamera ausgebildet. Sofern sich nachfolgend im Zusammenhang mit der Bearbeitung der Bildinformationen in der Auswertevorrichtung auf das Prüfbild bezogen wird, kann es sich in diesem Zusammenhang um den Prüfdatensatz handeln.

Die Auswertevorrichtung dient zur Auswertung des Prüfdatensatzes. Die Auswertevorrichtung umfasst zumindest einen Prozessor und ist entweder als zentrale Recheneinheit oder als dezentrales System umfassend zumindest einen Prozessor und zumindest einen Speicher mit unterschiedlichen Positionen an Bestandteilen der Maschine ausgebildet. Es handelt sich somit um ein lokales System, um etwaige Auswertungen unmittelbar vor Ort vorzunehmen und die Ergebnisse direkt zur Verfügung zu stellen.

Der Betriebsparameter ist eine variable Größe, die die Geometrie des Trenngerätes bzw. eines Trennelementes davon, die Position oder Ausrichtung relativ zum Maschinenrahmen oder zum Förderelement, eine Geschwindigkeit des Trenngerätes und/oder eine Motorleistung betrifft. Durch den Betriebsparameter lässt sich einstellen, auf welche Weise oder in welchem Ausmaß das Trenngerät mit dem Erntegut oder zumindest einem Bestandteil davon zusammenwirkt. Insbesondere lässt sich durch eine Variation des Betriebsparameters variieren, wieviel Beimengen stromabwärts des Trenngerätes bei den Hackfrüchten verbleiben, bezogen auf die Förderstrecke, über die die Hackfrüchte innerhalb der Maschine zu fördern sind. Der Betriebsparameter ist insbesondere unabhängig von einer Fördergeschwindigkeit des Förderelementes, das zur Förderung zumindest der Hackfrüchte dient, während diese auf dem Förderelement aufliegen und sich in die gleiche Richtung wie das Förderelement bewegen.

Durch den Betriebsparameter wird definiert, wie aggressiv das Trenngerät bei der Trennung von Hackfrüchten und Beimengen vorgeht. Bei zu geringer Aggressivität wird ein zu großer Teil der Beimengen nicht von den Hackfrüchten abgetrennt. Bei zu hoher Aggressivität werden nicht nur Beimengen, sondern auch Hackfrüchte beschädigt oder abgetrennt und somit der Ertrag vermindert. Durch die Erzeugung des Trenngeräteeinstellsignals und insbesondere durch die Übersendung dessen an ein Trenngerätsteuergerät wird der Betriebsparameter bevorzugt entsprechend des mit dem Prüfbild abgebildeten Erntegutes bzw. Teils des Erntegutes eingestellt. Anhand des Trenngeräteeinstellsignals erhöht oder verringert das Trenngerätsteuergerät insbesondere den Betriebsparameter. Das Trenngerätsteuergerät sendet dazu insbesondere ein elektrisches Signal, bevorzugt an einen Aktor, aus. Durch das Trenngerätsteuergerät, insbesondere durch das elektrische Signal, wird insbesondere ein Hydraulikdruck, ein Pneumatikdruck, ein Strom, eine Spannung, eine Kraft und/oder ein Moment zum Antrieb oder zur Verstellung des Trenngerätes oder des Betriebsparameters angepasst. Dabei ist das Trenngerätsteuergerät insbesondere Teil derselben Recheneinheit wie die Auswertevorrichtung.

Durch das Verfahren lässt sich eine kontinuierliche Optimierung des Betriebs des Trenngerätes erreichen. Insbesondere lässt sich die Aggressivität des Trennelementes bzw. des Trenngerätes laufend optimieren und somit sowohl ein schonender Umgang mit den Hackfrüchten und gleichzeitig eine effektive Trennung von Beimengen aus dem Erntegut erreichen.

Insbesondere wertet die Auswertevorrichtung zur Bereitstellung des Trenngeräteeinstellsignals die Prüfdatensätze lokal auf der Maschine oder einem an dieser unmittelbar angebundenen Zugfahrzeug aus. Hierdurch ist eine nahezu instantane Regelung bei Erkennen eines ungewünschten Zustands an einem Trenngerät möglich und Verstopfungen oder Beschädigungen werden entsprechend vermieden.

In einer vorteilhaften Weiterbildung des erfindungsgemäßen Verfahrens berechnet die Auswertevorrichtung zumindest einen von zumindest einem Bildbereich gebildeten, ersten Anteil des Prüfbildes. Der zumindest eine Bildbereich bildet zumindest teilweise einen definierten Bestandteil des Erntegutes oder der Maschine ab. Auf Basis des ersten Anteils wird insbesondere ein Reinigungskennwert berechnet.

Vor der Berechnung des ersten Anteils wird der Bestandteil, welcher durch den ersten Anteil statistisch repräsentiert wird, vordefiniert. Das Prüfbild und/oder der Prüfdatensatz werden insbesondere in eine Mehrzahl bevorzugt gleich großer Bildbereiche unterteilt. Die Bildbereiche, welche zumindest teilweise den Bestandteil zeigen, bilden zusammen den ersten Anteil. Der Anteil ist insbesondere ein Anteil dieser, den Bestandteil zumindest teilweise zeigenden Bildbereiche an den gesamten Bildbereichen, wobei der erste Anteil anhand eines Verhältnisses von Anzahlen von Bildbereichen oder anhand von deren gemeinsamen Flächen gebildet wird.

Der erste Anteil ist ein Maß für das Ausmaß von Bildbereichen, welche den Bestanteil abbilden und somit ein Maß für die Dichte des Bestandteils im Blickfeld der Bilderfassungseinheit bzw. des zu betrachtenden Anteil des Prüfbildes. Der Bestandteil ist insbesondere zumindest teilweise ein Hackfruchtbestandteil, wodurch der erste Anteil eine Konzentration von Hackfrüchten zumindest näherungsweise angibt. Ein Bildbereich wird insbesondere dann als den Bestandteil abbildend gewertet und dem ersten Anteil zugerechnet, wenn zumindest 50% bis 100% seiner Fläche den Bestandteil zeigen. Alternativ kann sich der Anteil durch Aufsummierung der einzelnen den Bestandteil abbildenden Pixel ergeben. Insbesondere kann der zumindest eine Bildbereich auch nur anteilig dem ersten Anteil zugerechnet oder bevorzugt unterschiedlichen Anteilen jeweils teilweise zugerechnet werden. Dies ist insbesondere vorteilhaft, wenn im Rahmen des vorzugsweise modellbasierten Klassifizierungsverfahrens keine eindeutige Zuordnung des Bildbereiches zu einem entsprechenden Bestandteil möglich ist. Bevorzugt werden in diesem Fall Wahrscheinlichkeiten für die Zuordnung zu unterschiedlichen Anteilen ermittelt. Die Bildbereiche werden besonders bevorzugt entsprechend der Wahrscheinlichkeiten anteilig bzw. teilweise unterschiedlichen Anteilen zugerechnet. Dadurch werden die Verhältnisse der Bestandteile zueinander noch exakter abgebildet.

Durch die Berechnung des ersten Anteils wird ein Kennwert berechnet, der insbesondere die Zusammensetzung des Erntegutes kennzeichnet. Auf dieser Basis lässt sich der Betriebsparameter besonders vorteilhaft regeln, da die Reinigungsleistung des Förderelementes oder des das Förderelement umfassenden Trenngerätes stark abhängig ist von der Zusammensetzung des Erntegutes. Für den Fall, dass der erste Anteil eine Konzentration an Beimengen kennzeichnet, lässt sich vorzugsweise der Betriebsparameter mit steigendem ersten Anteil variieren, um eine größere Trennwirkung oder Trennleistung zu erzeugen. Der Reinigungskennwert wird bevorzugt zumindest anhand des ersten Anteils berechnet oder ist gleich dem ersten Anteil.

Vorzugsweise wird der zumindest eine Bildbereich, der den ersten Anteil bildet, insbesondere auf Basis von einem anhand des Bildbereiches erzeugten Prüfunterdatensatzes, als den definierten Bestandteil zeigend identifiziert. Insbesondere wird der Bildbereich auf Basis eines im Prüfbild und/oder im Prüfunterdatensatz enthaltenen Prüfwertes, vorzugsweise einer Farbinformation, identifiziert. Die Farbinformation umfasst insbesondere Schwarz-Weiß-, Grau- und/oder Farbkanalwerte eines Farbraumes.

Bevorzugt wird der Prüfunterdatensatz, der Prüfwert bzw. die Farbinformation durch ein insbesondere modellbasiertes, statistisches Klassifizierungsverfahren klassifiziert. Ein Bildbereich wird demnach insbesondere dann dem ersten Anteil zugerechnet, wenn das Ergebnis des Klassifizierungsverfahrens dem definierten Bestandteil des Erntegutes bzw. der Maschine zugeordnet wird. Das Klassifizierungsverfahren nutzt insbesondere ein neuronales Netzwerk, einen Random Forest, einen Bayesian Classifier, eine Support Vector Machine und/oder einen Entscheidungsbaum. Durch die Anwendung des Klassifizierungsverfahrens ist das Ergebnis der Berechnung des ersten Anteils, insbesondere unterschiedlicher Anteile, besonders robust und aussagekräftig hinsichtlich der Zusammensetzung des Erntegutes.

Besonders bevorzugt wird der Prüfwert bzw. die Farbinformation mit einem oder mehreren Referenzwerten bzw. Referenzbereichen abgeglichen und darauf basierend ein Bildbereich entweder dem ersten Anteil zugerechnet oder nicht. Das Referenzbild ist bevorzugt wie das Prüfbild durch die optische Bilderfassungseinheit zu erfassen, wobei ein Anwender insbesondere unterschiedliche Teile des Referenzbildes als unterschiedliche Bestandteile zeigend zu markieren hat. Durch diese Form der Unterscheidung wird eine besonders zuverlässige Identifizierung eines betreffenden Bestandteiles auf dem Prüfbild ermöglicht. Besonders bevorzugt wird wenigstens einer der Prüfwerte des Prüfunterdatensatzes, welcher insbesondere die Farbinformation umfasst, mit zumindest einem Referenzwert verglichen und ein Bildbereich insbesondere dann dem ersten Anteil zugerechnet, wenn zumindest der wenigstens eine Prüfwert des Prüfunterdatensatzes innerhalb eines zugeordneten Referenzwertbereiches liegt. Dieser Referenzwertbereich ist insbesondere durch einen Höchstwert und durch einen Mindestwert begrenzt, wobei vorzugsweise zur Zurechnung des Bildbereiches zum ersten Anteil unterschiedliche Prüfwerte in jeweils zugeordneten Referenzwertbereichen liegen müssen.

In einer vorteilhaften Ausgestaltung der Erfindung entwickelt die Auswertevorrichtung bei Eingabe exemplarischer, dem ersten Anteil zuzurechnender Bildbereiche des Referenzbildes ein dem Klassifizierungsverfahren zugrundeliegendes Modell automatisch oder automatisch weiter. Alternativ oder zusätzlich berechnet oder verändert die Auswertevorrichtung den zumindest einen Referenzwertbereich bei Eingabe exemplarischer, dem ersten Anteil zuzurechnender Bildbereiche eines Referenzbildes automatisch. Insbesondere sind somit die Referenzwerte, Referenzwertbereiche bzw. das Modell oder Modellparameter davon zumindest nicht vollständig durch den Benutzer manuell vorzudefinieren. Stattdessen genügt es, zur Inbetriebnahme der Auswertevorrichtung zumindest einen exemplarischen Bildbereich, welcher den Bestandteil zeigt, einzugeben. Anhand des Bildbereiches ermittelt die Auswertevorrichtung den zumindest einen Referenzwert, den zumindest einen Referenzwertbereich bzw. das Modell oder Modellparameter davon automatisch. Somit stellt sich die Auswertevorrichtung auf unterschiedliche Anwendungsfälle weitgehend selbstständig ein. Je größer die Anzahl der eingegebenen Bildbereiche dabei ist, desto exakter können die Referenzwerte bzw. die Referenzwertbereiche bzw. das Modell oder Modellparameter davon ermittelt werden.

Besonders robust ist das Verfahren dann, wenn die eingegebenen Bildbereiche den Bestandteil bei unterschiedlichen Helligkeits- und/oder Bodenbedingungen zeigen. Somit ist das Verfahren auch bei unterschiedlichen Anwendungsbedingungen zuverlässig einsetzbar. Besonders bevorzugt passt die Auswertevorrichtung den zumindest einen Referenzwert bzw. die Referenzwertbereiche während der wiederholten Ausführung des Verfahrens an, gegebenenfalls unter exemplarischer Identifizierung relevanter Bestandteile durch den Bediener, woraus Trainingsdaten für den Algorithmus abgebildet werden können.

Insbesondere anhand von weiteren Sensoren wie Helligkeitssensoren zur Messung der Umgebungshelligkeit, die die Auswertevorrichtung im Wesentlichen zeitgleich aufgenommenen Prüfdatensätzen zuordnet, erweitert die Auswertevorrichtung automatisch den Umfang der Referenzdaten. Alternativ oder zusätzlich hat der Anwender des Verfahrens, d.h. insbesondere der Fahrer bzw. Bediener der Maschine oder einer damit gekoppelten Maschine, die Möglichkeit den zumindest einen Bestandteil auf visualisierten Prüfbildern manuell zu markieren, um den Umfang der Referenzdaten der Auswertevorrichtung zu erweitern. So kann sich aufgrund der vom Benutzer einmal gemachten Angaben oder aufgrund von in der Auswertevorrichtung hinterlegten Daten diese eine Unterscheidung von z.B. Kartoffeln, Kraut, Steinen, loser Erde und Kluten vornehmen und jeweilige Anteile ausrechnen.

Vorzugsweise wird das erfindungsgemäße Verfahren mit Ausnahme der Eingabe etwaig vorhandener Trainingsdaten in Form der Markierung von Bestandteilen, nach seinem Start automatisch ausgeführt. Dem Fahrer bzw. Bediener der Maschine ist deren Führung erleichtert.

Vorzugsweise werden die den ersten Anteil bildenden Bildbereiche auf Basis von jeweils benachbarten Bildbereichen erzeugten oder durch diese ausgebildeten Bildunterdatensätzen zusätzlich identifiziert. Insbesondere werden dazu wiederum von den Prüfunterdatensätzen umfasste Farbinformationen, insbesondere umfassend Schwarz-Weiß- und/oder Grauwerte genutzt. Die Bewertungen der Bildbereiche finden somit nicht allein anhand der diesen zugeordneten Daten statt, sondern es werden zusätzlich weitere, den umgebenden Bildbereichen zugeordnete Daten verwendet. Dadurch können Helligkeits- und/oder Farbverläufe ermittelt werden und somit die Identifikation auf Basis einer breiteren Datengrundlage stattfinden.

Bevorzugt werden die unterschiedlichen Bildbereiche bei der Berechnung des ersten Anteils unterschiedlich gewichtet. Der Beitrag der den ersten Anteil bildenden Bildbereiche ist somit unterschiedlich. Dadurch ist es möglich, den ersten Anteil nicht rein anhand der perspektivischen Darstellungen des Prüfbildes zu berechnen, sondern insbesondere Bildbereiche höher zu gewichten, die einen weiter von der Bilderfassungseinheit entfernten Bestandteil des Ernteguts zeigen als Bildbereiche, welche einen der Bilderfassungseinheit näheren Bestandteil zeigen. Dadurch lässt sich ein Perspektiven bereinigter erster Anteil bilden und somit ein besonders realitätsnahes Bild der Erntegutzusammensetzung auf dem Förderelement erreichen.

Vorzugsweise ist das gesamte Prüfbild oder ein zusammenhängender Prüfbildteil in Teilbildbereiche eingeteilt. Die Teilbildbereiche umfassen insbesondere jeweils die gleiche Anzahl an Pixeln des Prüfbildes, bevorzugt genau einen Pixel. Der Prüfbildteil ist ein Teil bzw. Ausschnitt des Prüfbildes, welcher eine Mehrzahl an Teilbildbereichen umfasst. Zum Berechnen des ersten Anteils werden insbesondere nur die den Anteil zeigenden Bildbereiche berücksichtigt, welche dem Prüfbildteil zugehören. Dazu ist der Prüfbildteil insbesondere so definiert, dass er sensible und zu überwachende Zonen innerhalb der Maschine abbildet. Der den ersten Anteil bildende Bildbereich umfasst somit insbesondere mehrere Teilbildbereiche eines Prüfbildteils.

Das Prüfbild oder der Prüfbildteil ist insbesondere in eine Mehrzahl von Teilbildbereichen gerastert, die jeweils bevorzugt rechteckig sind. Bei Ausbildung der Teilbildbereiche durch genau einen Pixel wird eine besonders große Datenbasis zur Bewertung des Zustandes des Ernteguts hinsichtlich seiner einzelnen Bestandteile geschaffen und somit eine besonders sensible Regelung des Betriebsparameters ermöglicht. Gleichzeitig sind die von herkömmlichen 2D-Digitalkameras mit in der Regel von maximal wenigen Millionen Pixeln gelieferten Datenmengen für eine mit einem oder mehreren aktuellen Prozessoren bestückte Auswertevorrichtung ohne weiteres zeitnah verarbeitbar.

Bevorzugt umfasst das Prüfbild mehrere Prüfbildteile, für die die Auswertevorrichtung jeweils einen ersten Anteil, insbesondere mehrere Anteile an Bildbereichen berechnet, wobei vorzugsweise die Prüfbildteile Erntegut unterschiedlicher von einem Trenngerät abfördernder Förderelemente abbilden. Die Prüfbildteile zeigen somit insbesondere unterschiedliche Abschnitte desselben Förderelementes, wovon einer in Förderrichtung vor einem Trenngerät oder einem Trennelement davon und ein weiterer hinter dem Trenngerät oder einem Trennelement davon angeordnet ist. Alternativ zeigen die Prüfbildteile unterschiedliche Förderelemente, welche alternative Förderpfade für unterschiedliche Bestandteile des Erntegutes darstellen (beispielsweise ein Förderelement für gereinigte Hackfrüchte, ein Förderelement für aussortierte Beimengen). Durch die Berechnung des ersten Anteils für diese unterschiedlichen Prüfbildteile kann die Reinigungs- bzw. Trennleistung des zugehörigen Trenngerätes besonders umfassend bewertet werden. Insbesondere kann der erste Anteil eines Erntegutzustroms zum Trenngerät mit dem ersten Anteil eines Hackfruchtgemischabstroms von der Trennvorrichtung bzw. dem Trenngerät verglichen werden und somit die Effektivität des Trenngeräts bestimmt werden. Alternativ wird vorzugsweise die Zusammensetzung des Ernteguts der sich an ein Trenngerät anschließenden und somit von diesem abfördernden Förderelemente, einmal für herausgetrenntes Erntegut und einmal für weiterzuförderndes Erntegut bestimmt. Abhängig von der Effektivität des Trenngerätes wird insbesondere der Betriebsparameter eingestellt. Ebenfalls können die in jeweiligen Prüfdatensätzen abgebildeten oder vorliegenden Prüfbildteile einen Teil eines Förderelements vor einem Trenn- oder Umlenkelement des Trenngerätes und einen Teil des Förderelements nach dem Trenn- oder Umlenkelement zeigen. Sofern die Bildanalyse ergibt, dass zu große Anteile von z.B. Hackfrüchten hinter einem Umlenkelement in einem ungewünschten Bereich auftauchen, kann dieses Umlenkelement anders, z.B. niedriger über dem Förderelement positioniert werden, was die Trennleistung erhöht.

In einer vorteilhaften Ausführung der Erfindung zeigen die Prüfbildteile bevorzugt unterschiedliche Förderelemente nach einem Trenngerät, insbesondere ein Förderelement zur Abführung eines Hackfruchtgemisches und ein Förderelement zur Abführung von Beimengen nach demselben Trenngerät. Für beide Prüfbildteile wird in diesem Fall bevorzugt ein erster Anteil eines Bestandteils, etwa an Hackfrüchten, bestimmt. Alternativ werden für die unterschiedlichen Prüfbildteile unterschiedliche Anteile berechnet. Damit lässt sich etwa ein Anteil von Beimengen im Hackfruchtgemischabstrom abgleichen mit einem Anteil von Hackfrüchten in einem Strom von aussortierten Beimengen und darauf basierend ein von dem Trenngerät umfasstes Trennelement hinsichtlich seiner Lage zum Förderelemente oder hinsichtlich seiner Geschwindigkeit einstellen.

Bevorzugt zeigen die den ersten Anteil bildenden Bildbereiche Hackfrüchte oder Teile davon und einen zweiten Anteil bildende Bildbereiche Beimengen oder Teile davon. Somit berechnet die Auswertevorrichtung zumindest zwei unterschiedliche Anteile. Besonders bevorzugt berechnet die Auswertevorrichtung zumindest vier Anteile, einen ersten Anteil für Hackfrüchte, einen zweiten Anteil für Krautbestandteile, einen dritten Anteil für Erde sowie einen vierten Anteil für beschädigte Stellen. Die Summe der Anteile ist insbesondere ≤1. Alternativ kann der erste Anteil auch ein Beimengenanteil sein, der zweite Anteil ein Hackfruchtanteil etc. sein. Zusätzlich oder alternativ werden bevorzugt Anteile für Kluten und/oder Steine berechnet.

Alternativ oder ergänzend sind bei einem weiteren erfindungsgemäßen Weiterbildung zumindest zwei Bilderfassungseinheiten und zumindest zwei Förderelemente vorgesehen, wobei die erste Bilderfassungseinheit ein erstes Prüfbild eines von einem Trenngerät mittels des ersten Förderelements abgeförderten Erntegutteils aufgenommen wird, die zweite Bilderfassungseinheit ein weiteres Prüfbild eines von dem Trenngerät mittels des zweiten Förderelements abgeförderten Erntegutteils aufgenommen wird und das Trenngeräteeinstellsignal auf Basis zumindest einer der durch, vorzugsweise beider die beiden Prüfbilder ausgebildeten oder auf Basis dieser erzeugten Prüfdatensätze erzeugt wird. Die Prüfdatensätze werden hierbei jeweils wie vor- oder nachbeschrieben insbesondere hinsichtlich der jeweiligen Anteile ausgewertet.

Durch eine Mehrzahl von Anteilen in der Berechnung der Auswertevorrichtung lässt sich ein genaueres Bild der Zusammensetzung des Erntegutes bzw. der Belegung des Förderelementes erreichen. Alternativ zu einer Identifikation von Bildbereichen anhand von Grenzwerten werden sämtliche Bildbereiche des Prüfbildes oder eines Prüfbildteiles notwendigerweise einem Anteil zugeordnet. Dabei wird vorzugsweise ein Grad der Übereinstimmung von anhand der Bildbereiche berechneten Prüfunterdatensätzen mit Referenzunterdatensätzen bewertet und jeder Bildbereich dem Anteil zugeordnet, für den die Übereinstimmung am größten ist.

In einer vorteilhaften Ausgestaltung der Erfindung wird der Reinigungskennwert mittels einer von der Auswertevorrichtung berechneten Abweichung des ersten Anteils von einem Schwellenwert bestimmt. Insbesondere kennzeichnet der Schwellenwert eine optimale Auslastung des Förderelementes, wobei eine Abweichung von einem definierten Betrag davon eine Veränderung des Betriebsparameters auslöst. Der Reinigungskennwert basiert insbesondere auf einer Mehrzahl von Anteilen sowie bevorzugt weiteren Daten, insbesondere Sensordaten.

In einer vorteilhaften Ausgestaltung der Erfindung wird das Trenngeräteeinstellsignal anhand einer Mehrzahl von insbesondere zeitlich nacheinander berechneten Reinigungskennwerten berechnet oder fließt zumindest ein zuvor berechneter Reinigungskennwert in die Berechnung des Reinigungskennwertes ein. Insbesondere wird ein gleitender Mittelwert des Reinigungskennwertes berechnet und liegt dem Trenngeräteeinstellsignal zugrunde oder findet eine Glättung des Reinigungskennwertverlaufes, insbesondere anhand eines Tiefpassfilters, statt. Durch diese Maßnahmen wird das erfindungsgemäße Verfahren besonders störungsunanfällig und somit besonders robust anwendbar.

In einer vorteilhaften Ausgestaltung der Erfindung übermittelt zumindest ein weiterer Sensor Sensordaten an die Auswertevorrichtung, die in die Berechnung des Trenngeräteeinstellsignals einfließen. Bei dem Sensor handelt es sich insbesondere um einen Sensor, bevorzugt einen Tastsensor oder einen Ultraschallsensor, zur Messung einer Erntegut-Schichtdicke auf dem Förderelement, einen Sensor zur Messung einer Antriebsleistung, beispielsweise in Form eines Drucksensors zur Messung eines Hydrauliköldrucks und/oder einen Drehzahlsensor insbesondere zur Messung einer Drehzahl eines Förderelementantriebs. Insbesondere wird anhand des Drehzahlsensors ein Schlupf des Förderelements ermittelt, der in Form der Sensordaten an die Auswertevorrichtung übermittelt wird. Mittels eines Feuchtesensors können weitere Informationen in die Berechnung des Trenngeräteeinstellsignals einfließen.

Auf Basis dieser weiteren in den Sensordaten vorliegenden Informationen, die über die auf Basis des Prüfbildes bereitgestellten hinausgehen, liegt der Auswertevorrichtung ein wesentlich exakteres Bild der Reinigungssituation im Bereich des Förderelements vor, wodurch wiederum der Betriebsparameter besser abgestimmt darauf beeinflusst werden kann.

Vorzugsweise löst die Auswertevorrichtung mittels unterschiedlicher Trenngeräteeinstellungssignale entweder eine Erhöhung oder Verringerung des Betriebsparameters aus. Insbesondere umfasst die Auswertevorrichtung oder das Trenngerätsteuergerät einen Fuzzy-Regler, einen PID- oder Dreipunktregler, wodurch alternativ zueinander entweder die Erhöhung, die Verringerung oder eine Beibehaltung des aktuellen Betriebsparameters ausgelöst wird. Eine Erhöhung wird insbesondere dann ausgelöst, wenn der Reinigungskennwert einen vordefinierten ersten Schwellwert überschreitet, eine Verringerung wird entsprechend ausgelöst, wenn der Reinigungskennwert einen vordefinierten, zweiten Schwellwert unterschreitet.

Bevorzugt ist der Betriebsparameter ein Abstand zweier Förderelemente zueinander, wobei durch den Abstand die Förderelemente gemeinsam als Trenngerät fungieren können, oder eines Trennelementes des Trenngerätes bzw. des Trenngerätes zu einem Förderelement. Insbesondere ist der Betriebsparameter ein Abstand zweier im Betrieb rotierender Förderwalzen eines Walzentisches zueinander, zwischen denen Erde abgesiebt wird. Alternativ ist der Betriebsparameter ein Abstand eines als Siebband ausgebildeten Förderelementes zu einem als Umlenkwalze ausgebildeten Trennelement, wobei das Trennelement sich quer über das Förderelement erstreckt und ein seitliches Ablenken der Hackfrüchte vom Förderelement bewirkt. Dabei rotiert die Umlenkwalze im Betrieb um eine Rotationsachse, die in einer Draufsicht auf das Förderelement um weniger als 90° zur Förderrichtung des Förderelementes angewinkelt ist. Alternativ ist das Trennelement als im Betrieb umlaufendes Fingerband ausgebildet, das sich oberhalb des Förderelementes befindet und dessen nach außen abstehende Finger im Betrieb durch das auf dem Förderelement angeordnete Erntegut kämmen. Wiederum alternativ ist das Trennelement als im Betrieb nicht umlaufende Abstreifvorrichtung ausgebildet, die oberhalb eines mit einem Siebband zusammenwirkenden Grobkrautbandes angeordnet ist und ein Abstreifen von Hackfrüchten von auf dem Grobkrautband abgelagerten Kraut bewirkt. Der Abstand ist jeweils insbesondere durch eine hydraulische oder mechanische Stellvorrichtung einstellbar, wodurch die Aggressivität des Trennelementes des Trenngerätes im Zusammenwirken mit dem Förderelement bzw. die Trennleistung der Förderelemente besonders einfach geändert werden kann.

Alternativ ist der Betriebsparameter eine Eindringtiefe zumindest eines Rodeschares der Maschine in den Erdboden. Dadurch kann auf einfache Weise die Menge an Beimengen im Erntegut beeinflusst werden.

Alternativ oder zusätzlich zum oben stehenden ist der Betriebsparameter eine Trenngeschwindigkeit, insbesondere eine Umlauf- oder Rotationsgeschwindigkeit, des Trenngerätes bzw. eines Trennelements des Trenngerätes. Insbesondere ist die Trenngeschwindigkeit eine Umlaufgeschwindigkeit des vorbeschriebenen Fingerbandes oder eine Rotationsgeschwindigkeit der vorbeschriebenen Umlenkwalze. Alternativ ist die Trenngeschwindigkeit eine Umlaufgeschwindigkeit eines angewinkelten und in dem Betrieb Beimengen aufwärts fördernden Trenngerätes, z.B. in Form eines Feinkrautbandes, das derart betrieben wird, dass möglichst Beimengen aufwärts gefördert werden und Hackfrüchte entgegen der Bewegungsrichtung des ihnen zugewandten Abschnitts des Trenngerätes hinabrollen.

Bevorzugt ist der Betriebsparameter alternativ als Anstellwinkel des Förderelementes, des Trenngerätes, d.h. zumindest eines Trennelements des Trenngeräts, ausgeprägt. Insbesondere ist der Betriebsparameter der Anstellwinkel des auch als Feinkrautelevator bezeichneten Trenngerätes. Durch den Anstellwinkel wird die Neigung der Förderebene eines Feinkrautbandes des Trenngerätes relativ zu einer Horizontalen verändert und somit die Aggressivität des Trenngerätes eingestellt.

In einer alternativen vorteilhaften Ausgestaltung der Erfindung bewirkt der Betriebsparameter eine Änderung einer Luftstromgeschwindigkeit oder eines Luftmassendurchsatzes pro Zeit, wobei das entsprechende Trenngerät aufgrund von Luftströmung trennt. Hierbei kann eine Motorleistung, z.B. abgebildet durch eine Motordrehzahl der entsprechende Betriebsparameter sein. Durch die Luft wird dabei wiederum die Trennung von Hackfrüchten und Beimengen bewirkt, insbesondere Kraut aus einem Erntegutstrom abgeblasen und somit entfernt. Der Betriebsparameter ist bei einer solchen, insbesondere auch stationär einsetzbaren Lufttrennvorrichtung vorzugsweise eine Drehzahl eines zugehörigen Gebläses oder der Anstellwinkel eines zugehörigen Aggregates in Form eines Luftleitbleches, welches z.B. einen Luftstrom in Hauptluftstrom und einen Querluftstrom unterteilt, sein.

In einer vorteilhaften Ausgestaltung des erfindungsgemäßen Verfahrens werden insbesondere mehrere der vorgenannten Betriebsparameter durch das gleiche oder unterschiedliche Trenngeräteeinstellsignale eingestellt. In der Auswertevorrichtung kann hierfür ein Regelwerk hinterlegt sein, das für die gewünschte Mehr- oder Mindertrennleistung des jeweiligen Trenngerätes entsprechende Signale für die jeweiligen einstellbaren Größen ergibt.

Bevorzugt wird nach dem Auslösen einer Betriebsparameteränderung für einen definierten Zeitraum oder eine definierte Förderstrecke des Förderelementes keine weitere Betriebsparameteränderung ausgelöst. Das betrifft insbesondere lediglich denselben Betriebsparameter und/oder zumindest einen Betriebsparameter zumindest eines im Betrieb stromabwärts angeordneten Trenngeräts. Dadurch wird sichergestellt, dass es zu keiner Überregulierung des Trennelementes kommt und jede Betriebsparameteränderung eine fundierte Datengrundlage, welche eine zurückliegende Betriebsparameteränderung bereits berücksichtigt, zugrunde liegt.

Vorzugsweise wird das Trenngeräteeinstellsignal drahtgebunden, insbesondere mittels CAN-Bus oder Ethernet, oder drahtlos an das Trenngerätsteuergerät übermittelt, wobei die Trenngeräteeinstellung vorzugsweise vorab von einer Bedienperson über eine Eingabe an einer Schnittstelle freizugeben ist. Dadurch können bestehende oder zumindest etablierte Systeme zur Kommunikationsübertragung zur Einstellung des Trennelementes genutzt werden und die Zuverlässigkeit des Verfahrens insbesondere dadurch erhöht werden, dass eine Bedienperson die sich ergebende oder vorzunehmende Einstellung des Trenngerätes anstelle dessen automatischer Einstellung insbesondere in der Fahrerkabine angezeigt bekommt und an einer Schnittstelle über eine entsprechende Eingabe freizugeben hat.

Die Aufgabe wird erfindungsgemäß außerdem durch eine Maschine zum Ernten von Hackfrüchten und/oder zum Trennen von Hackfrüchten von weiteren Erntegutbeimengen gelöst. Die Maschine weist einen Maschinenrahmen, ein Förderelement, eine Bilderfassungseinheit, ein Trenngerät und eine Auswertevorrichtung auf. Die Maschine ist zur Ausführung des vor- oder nachbeschriebenen Verfahrens ausgebildet.

Vorzugsweise umfasst die Auswertevorrichtung eine graphische Prozessoreinheit, insbesondere eine GPU- (Graphical Processing Unit) bzw. GPGPU- (General Purpose Graphical Processing Unit) und/oder eine FPGA (Field Programmable Gate Array)-basierte Prozessoreinheit. Durch diese Ausprägung der Auswertevorrichtung lässt sich der Prüfdatensatz besonders ressourcenschonend und insbesondere lokal auswerten. Es versteht sich, dass die als EDV-Vorrichtung ausgebildete Auswertevorrichtung weitere übliche Mittel z.B. zur Stromversorgung, Schnittstellen und Arbeitsspeicher aufweist.

In einer vorteilhaften Ausgestaltung der Erfindung hat die Maschine zumindest einen mit der Auswertevorrichtung gekoppelten Sensor, insbesondere einen Tast- oder Ultraschallsensor zur Messung einer Erntegut-Schichtdicke auf dem Förderelement, einen Sensor zur Messung einer Antriebsleistung, beispielsweise einen Drucksensor zur Messung eines Hydrauliköldrucks, und/oder einen an einem Förderelement angeordneten Drehzahlsensor. Durch diesen Sensor lässt sich das Fördergeschwindigkeitssignal auch auf Basis gemessener, physikalischer Größen berechnen, wodurch die Aussagekraft der mit der Auswertevorrichtung berechneten Größen deutlich erhöht und deren Fehleranfälligkeit reduziert ist. Ebenfalls kann ein Feuchtesensor zusätzlich Informationen bereitstellen, die im Rahmen der Analyse der Auswertevorrichtung zur Einstellung eines oder mehrerer der Trenngeräte beitragen.

Bevorzugt weist die Maschine mehrere im Betrieb jeweils zumindest ein Prüfbild von demselben Förderelement aufnehmende Bildaufnahmeeinheiten auf. Alternativ hat die Maschine bevorzugt mehrere in Betrieb jeweils zumindest ein Prüfbild von unterschiedlichen, insbesondere von einem selben Trenngerät abfördernden, Förderelementen aufnehmende Bilderfassungseinheiten. Alternativ kann eine der beiden Bilderfassungseinheiten auf einen Abförderbereich zum Beispiel eines durch Luftströmung trennenden Trenngerätes gerichtet sein. Durch die Mehrzahl an Bilderfassungseinheiten lässt sich die Zusammensetzung des Erntegutes, insbesondere ein Verlauf des ersten Anteils entlang einer Förderstrecke und insbesondere auf unterschiedlichen Teilen der Förderstrecke nach einem Trenngerät der Maschine verfolgen. Insbesondere lassen sich somit die Fördergeschwindigkeiten unterschiedlicher Förderelemente anhand unterschiedlicher, erster Anteile einstellen. Entsprechend wird gemäß dem vor- oder nachbeschriebenen Verfahren eine Analyse für die von den jeweiligen Prüfbildern erfassten Förderstreckenbereiche in der zumindest einen Auswertevorrichtung vorgenommen. Während bevorzugt lediglich eine zentrale Auswertevorrichtung für die Auswertung der Daten der Bilderfassungseinheiten vorgesehen ist, können den jeweiligen Bilderfassungseinheiten auch eigene Auswertevorrichtungen zugeordnet sein. Diese können dann die jeweils zugeordneten Trenngeräte insbesondere in Abstimmung mit weiteren Auswertevorrichtungen ansteuern. Alternativ oder ergänzend ist eine zentrale Auswertevorrichtung für die Erstellung der Trenngeräteeinstellsignale zuständig und gibt diese an eine Maschinensteuerung weiter.

Vorzugsweise ist die Bilderfassungseinheit derart angeordnet, dass das Prüfbild zumindest zwei alternative Förderpfade der gesamten Förderstrecke für unterschiedliche Erntegutbestandteile, insbesondere für Hackfrüchte und für Beimengen zeigt. Dadurch lassen sich anhand einer Bilderfassungseinheit zwei Förderelemente überwachen, wobei je ein Prüfbildteil des Prüfbildes einen Abschnitt der unterschiedlichen Förderelemente oder des Erntegutes darauf abbildet. Insbesondere ist eines der Förderelemente zur Förderung von aussortierten Beimengen und ein weiteres der Förderelemente zur Förderung von gereinigten Hackfrüchten ausgebildet. Dadurch lässt sich ein besonders umfassendes Bild der Reinigungsleistung und somit der Auslastung des Förderelementes und/oder des das Förderelement umfassenden Trenngerätes erfassen.

Bevorzugt ist die Bilderfassungseinheit so angeordnet, dass im Betrieb das Prüfbild zumindest zwei durch ein Trenngerät, insbesondere ein Trennelement eines Trenngerätes getrennte Förderelementabschnitte jeweils zumindest teilweise abbildet. Die Förderelementabschnitte sind lediglich in der Darstellung durch das Prüfbild durch das Trennelement des Trenngerätes getrennt und sind jeweils vom Förderelement umfasst. Das Trennelement ist der Bilderfassungseinheit näher als das Förderelement und letzteres dadurch auf dem Prüfbild vom Trennelement überdeckt. Durch diese Positionierung der Bilderfassungseinheit ist es ermöglicht, für zwei einzelne Prüfbildteile je zumindest einen ersten Anteil zu berechnen und somit unmittelbar die Effektivität des Trennelementes und des zugehörigen Trenngerätes zu bewerten. Insbesondere wird dazu die Zusammensetzung eines Erntegutes vor Erreichen des Trennelementes mit der Zusammensetzung zumindest eines Anteils des Erntegutes nach Passieren des Trennelementes verglichen.

Vorzugsweise ist das Förderelement als Siebband oder Igelband ausgebildet, das im Betrieb insbesondere unter zumindest einer sich quer über das Förderelement erstreckenden und Erntegut davon seitlich ablenkenden Umlenkwalze hindurch verläuft. Alternativ ist das Förderelement als Siebstern oder Förderwalze ausgebildet, wobei die Förderwalze insbesondere umfasst ist von einem Walzentisch.

Die Maschine ist alternativ oder ergänzend zum Vorstehenden als Maschine zum Trennen von Hackfrüchten von weiterem Erntegut ausgebildet. Dabei wird die Maschine gemäß einer vorteilhaften Weiterbildung insbesondere stationär, das heißt ohne eine kontinuierliche, lokale Vorbewegung der Maschine während des Betriebs betrieben.

Gemäß einer anderen vorteilhaften Weiterbildung handelt es sich bei der Maschine um einen Kartoffelroder oder einen Rübenroder.

Weitere Einzelheiten und Vorteile der Erfindung sind in nachfolgend beschriebenen schematisch dargestellten Ausführungsbeispielen zu entnehmen;

Es zeigt:
- Fig. 1: einen Programmablaufplan eines erfindungsgemäßen Verfahrens,
- Fig. 2: einen zugehörigen Programmablaufplan zur Ermittlung des Trenngeräteeinstellsignals,
- Fig. 3: einen zugehörigen Programmablaufplan mit der Verarbeitung der Reinigungskennwerte,
- Fig. 4: einen zugehörigen Programmablaufplan zur Trenngeräteeinstellung,
- Fig. 5: eine Ansicht eines Prüfbildes und dessen teilweise Auswertung,
- Fig. 6: einen erfindungsgemäßen Gegenstand,
- Fig. 7 u. 8: den Gegenstand nach Fig. 6 in unterschiedlichen Seitenansichten,
- Fig. 9: eine Teilansicht des Gegenstandes gem. Fig. 6 mit einem Förderelement,
- Fig. 10: einen Detailansicht eines in Fig. 9 abschnittweise dargestellten Bereiches der Vorrichtung nach Fig. 6,
- Fig. 11: den Gegenstand gemäß Fig. 10 aus einer abweichenden Perspektive,
- Fig. 12: eine Darstellung des Prüfbildes der Bilderfassungseinheit nach Fig. 10,
- Fig. 13: ein Trenngerät der Maschine gem. Fig. 6 mit einer Bilderfassungseinheit,
- Fig. 14: ein schematisches, aus Perspektive der in Fig. 13 gezeigten Bilderfassungseinheit aufgenommenes Prüfbild,
- Fig. 15: ein weiteres Trenngerät der Maschine gem. Fig. 6 mit einer Bilderfassungseinheit,
- Fig. 16: ein schematisch dargestelltes und aus Perspektive der in Fig. 15 gezeigten Bilderfassungseinheit aufgenommenes Prüfbild,
- Fig. 17: eine weitere Detailansicht einer Maschine gem. Fig. 6 mit einer weiteren Bilderfassungseinheit,
- Fig. 18: eine schematische Darstellung eines Prüfbildes betrachtet aus der Perspektive der Bilderfassungseinheit nach Fig. 17,
- Fig. 19: eine Detailansicht einer weiteren erfindungsgemäßen Vorrichtung,
- Fig. 20: eine weitere Detailansicht einer weiteren erfindungsgemäßen Vorrichtung.

Gleich oder ähnlich wirkende Teile sind - sofern dienlich - mit identischen Bezugsziffern versehen. Einzelne technische Merkmale der nachfolgend beschriebenen Ausführungsbeispiele können auch mit den Merkmalen der vorbeschriebenen Ausführungsbeispiele zu erfindungsgemäßen Weiterbildungen führen, stets aber zumindest in Kombination mit den Merkmalen eines der unabhängigen Ansprüche. Die in der Figurenliste aufgeführten Gegenstände sind in einzelnen Figuren mitunter nur teilweise dargestellt.

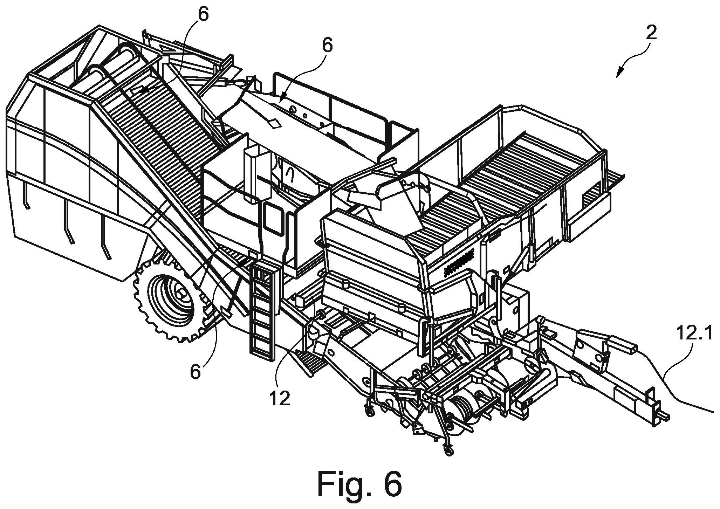

Das erfindungsgemäße Verfahren dient zur Regelung des Betriebs einer Maschine 2 zum Ernten von Hackfrüchten 4 (vgl. Fig. 6 bis 8). Bei dem Verfahren wird durch mindestens eine optische Bilderfassungseinheit 6 zumindest ein Prüfbild 8 aufgenommen, das mittels zumindest eines zunächst allgemein mit 10 bezifferten Förderelementes relativ zu einem Maschinenrahmen 12 der Maschine 2 fortbewegtes Erntegut umfassend Hackfrüchte 4 zeigt.

Das Prüfbild 8 wird an eine Auswertevorrichtung übermittelt, die auf Basis eines anhand des Prüfbildes erzeugten oder durch dieses ausgebildeten Prüfdatensatzes ein Trenngeräteeinstellsignal zur Einstellung zumindest eines Betriebsparameters eines Trenngerätes der Maschine (2) erzeugt. Die als Prüfbilder dargestellten Abbildungen zeigen lediglich schematisch die für die Erfindung relevanten Teile ohne etwaige Umrandungen oder Begrenzungen. Von einer Kamera aufgenommene, insbesondere digitale Bilder weisen gegebenenfalls weitere, nicht in den Abbildungen dargestellte Informationen auf. Diese können beispielsweise bereits kameraseitig oder bei Erstellung oder Bearbeitung eines Prüfdatensatzes maskiert oder gefiltert werden.

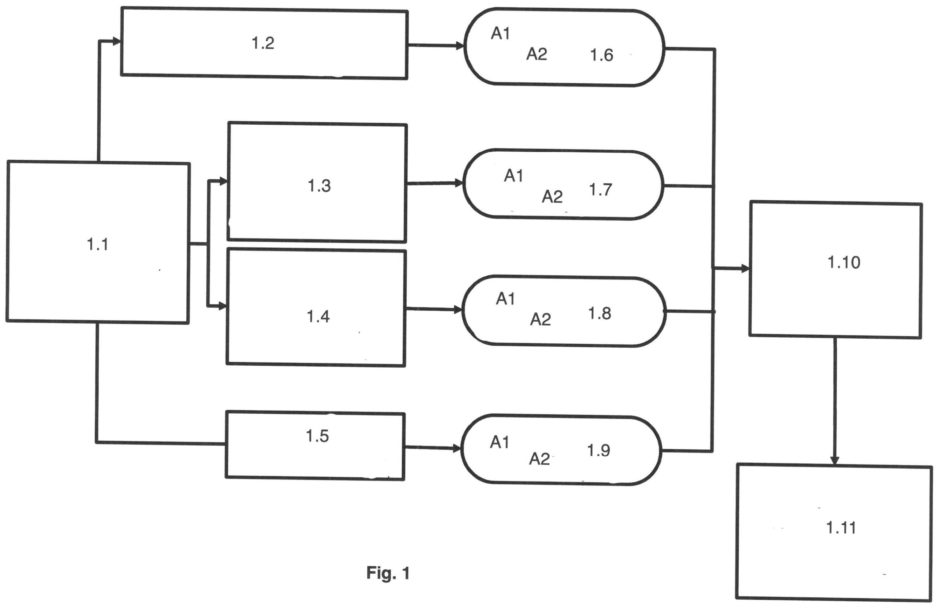

Bei einem erfindungsgemäßen Ausführungsbeispiel wird ausgehend von einem Gutfluss 1.1 mittels des vorstehend beschriebenen Verfahrens vor einem ersten Trennelement eine Auswertung der Zusammensetzung des Ernteguts vorgenommen (Block 1.2) (Fig. 1). Darüber hinaus wird vor dem Eingang und nach dem Ausgang eines weiteren Trenngerätes ebenfalls wieder die Zusammensetzung des Erntegutstroms berechnet (Blöcke 1.3 und 1.4). Schließlich wird wiederum zum Eingang eines dritten Trenngeräts ebenfalls wieder der Erntegutstrom in seiner Zusammensetzung bestimmt. Hieraus ergeben sich jeweilige Anteile A1 und A2 von Hackfrüchten und Beimengen (Blöcke 1.6, 1.7, 1.8 und 1.9). In Abhängigkeit von gewünschten Trennleistungen an den einzelnen Trenngeräten werden in der Auswertevorrichtung die einzelnen Anteile A1 und A2 von Hackfrüchten bzw. Beimengen für jeweilige Trenngeräte miteinander verrechnet (Block 1.10). Hierauf erfolgt die Einstellung der Betriebsparameter der jeweiligen Trenngeräte (Block 1.11), um am jeweiligen Trenngerät die Leistung zu optimieren.

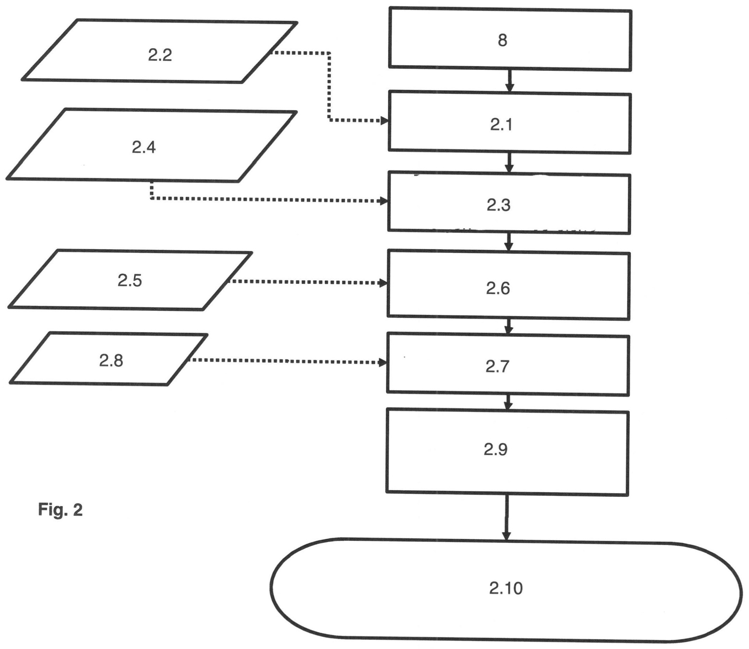

Die Ermittlung des Trenngeräteeinstellsignals ist in einem größeren Detailgrad in der Fig. 2 dargestellt. Ausgehend von einem Prüfbild 8 erfolgt zunächst zwecks Stellung des Prüfdatensatzes eine Extraktion der relevanten Prüfbildteile (Block 2.1). Hierfür kann basierend auf der Position der Bilderfassungseinheit eine Maske bzw. Region of Interest (ROI) vordefiniert sein (Block 2.2), anhand derer zu berücksichtigende und nicht zu berücksichtigende Abstände des Prüfbildes unterschieden werden. Auf Basis des relevanten Bildabschnittes des Prüfbildes und des nun für die Bearbeitung vorhandenen Prüfdatensatzes wird nun die Berechnung von Anteilen der einzelnen Erntegutbestandteile zeigender Bildbereiche vorgenommen (Block 2.3). Hierzu können insbesondere die Farbinformationen ausgewertet werden. Diese Werte können aus einer Referenztabelle entnommen werden oder auch durch ein Bedienpersonal vorgegeben werden (Block 2.4).

Auf Basis einer Schwellenwert-Definition (Block 2.5) werden die Abweichungen der berechneten Anteile von dem Schwellenwert berechnet (Block 2.6). Der Schwellenwert ist beispielsweise ein für den jeweils betrachteten Anteil (z.B. Hackfrucht, Beimenge 1, Beimenge 2) idealer Wert. Anschließend erfolgt eine Tiefpassfilterung zwecks Glättung der ermittelten Abweichungen (Block 2.7). Hierbei wird eine gem. Block 2.8 definierte Filterzeitkonstante verwendet. Anschließend wird ein Reinigungskennwert RS basierend auf den geglätteten Werten der Abweichungen für die einzelnen Positionen entlang der Förderstrecke und die jeweiligen Anteile berechnet (Block 2.9). Hierbei können vereinfachend Regler-Parameter eingesetzt werden, nach denen zum Beispiel ein Reinigungskennwert RS_1 (A1) an einer ersten überwachten Förderstrecke für einen Anteil A1 in Form von Hackfrüchten auf 1 gesetzt wird, wenn die Abweichung zu groß ist und daher zu viele Beimengen im betrachteten Prüfbild(teil) vorhanden sind. Der Reinigungskennwert RS für einen Anteil A1 kann bei ausreichend kleinen Abweichungen von einem idealen Wert auf null gesetzt werden. Auf Basis des Reinigungskennwerts RS_1 (A1) des Blocks 2.9 kann beispielsweise mittels eines Dreipunktreglers das Trenngeräteeinstellsignal erzeugt werden (Block 2.10).

Mittels des erfindungsgemäßen Verfahrens werden so beispielsweise die Verhältnisse zwischen der in einem Gutfluss vorhandenen Produkte vor einem Trenngerät und dann nach einem Trenngerät, beispielsweise auf einem abfördernden Förderelement für Produkte, d.h. Hackfrüchte (4), und einem abfördernden Förderelement für Beimengen (5) separat ausgewertet. Für den Fall, dass eine einzelne Kamera beide Förderelemente überwacht, werden hierfür separate Regions of Interest für das Beimengen und für das Hackfrüchte abfördernde Förderelement definiert. Abhängig davon, ob zu viele Kartoffeln (Hackfrüchte 4) auf dem Beimengen abfördernden Förderelement sind oder zu viele Beimengen auf dem Produkte abfördernden Förderelement vorhanden sind, werden Parameter des Trenngeräts, welche die Trennschwelle beeinflussen, entsprechend angepasst. So können insbesondere die Finger eines Fingerbandes bzw. Bürsten eines Bürstenbandes höher oder tiefer gestellt werden und/oder das Finger- oder Bürstenband kann langsamer oder schneller laufen.

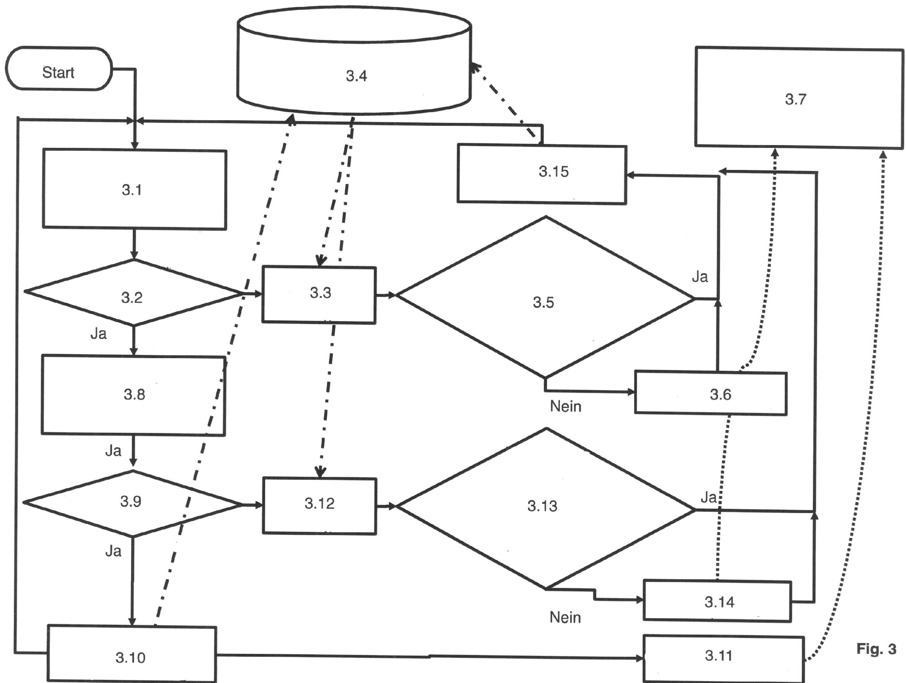

In einer exemplarischen Umsetzung des Drei-Punkt-Regelsystems nach Fig. 3 wird zunächst auf Reinigungskennwerte RS_1(A2) - RS_n(A2), d.h. Reinigungskennwerte für die Beimengen beschreibenden Anteile A2 gehört (Block 3.1). Beispielhaft handelt es sich hierbei um die Betrachtung der Anteile von Beimengen im Erntegut in Form von Steinen vor und nach einem Trenngerät bzw. vor und nach einer Förderstrecke umfassend mehrere Trenngeräte. Die Reinigungskennwerte sind entsprechend der vorstehenden Diktion "null" oder "eins". Anschließend wird im Block 3.2 geprüft, ob die Summe der Reinigungskennwerte RS_i (A2) (mit i=1...m) gleich Null ist. Falls das verneint wird, wird im Block 3.3 zunächst eine Abfrage des Speichers 3.4 der letzten Reinigungskennwerte und ggf. zugehörigen Erntegutzusammensetzungen an den jeweiligen Positionen vorgenommen. Sofern eine Prüfung im Block 3.5 ergibt, dass eine Änderung von Trenngeräteeinstellungen ausreichend lange her ist, wird in Block 3.6 ein degressives Betriebsparametersignal für das jeweilige Trenngerät erzeugt. Hierbei können auch die abgefragten Reinigungskennwerte aus dem Speicher berücksichtigt werden. Die Einstellung des oder der Trenngeräte (Block 3.7) erfolgt weniger aggressiv, so dass weniger Hackfruchtanteile im Beimengen- oder im Erntegutstrom auf der Förderstrecke verbleiben. Der oder die letzten Reinigungskennwerte RS_i (A2) werden im Speicher 3.4 eingetragen, ggf. mit jeweils zugehörigen Anteilen A2 (Block 3.15).

Für den Fall, dass die Summe der Reinigungskennwerte RS_i (A2) (mit i=1...m) gleich Null ist, wird anschließend im Block 3.8 auf Reinigungskennwerte RS_i (A1) betreffend die Anteile A1, z.B. Hackfrüchte, gehört bzw. werden diese entsprechend abgefragt. Anschließend wird geprüft, ob die Summe dieser Reinigungswerte wieder Null ergibt (Block 3.9). Falls dem so ist, werden die letzten Reinigungskennwerte RS_i(A1) ebenfalls wieder im Speicher 3.4 eingetragen (Block 3.10). Eine Änderung der Betriebsparameter ist nicht notwendig und es wird ein neutrales Betriebsparametersignal oder kein Betriebsparametersignal ausgegeben (Block 3.11). Sollte die Summe der Reinigungswerte zu den Anteilen A1 ungleich Null sein, so werden unter 3.12 wieder die alten Werte aus dem Speicher abgefragt und im Block 3.13 wird geprüft, ob bereits ausreichend Zeit seit Änderung der letzten Betriebsparameter verstrichen ist. Falls dies der Fall ist, wird unter 3.14 ein Betriebsparameter zur aggressiveren Einstellung der Trenngeräte ausgegeben.

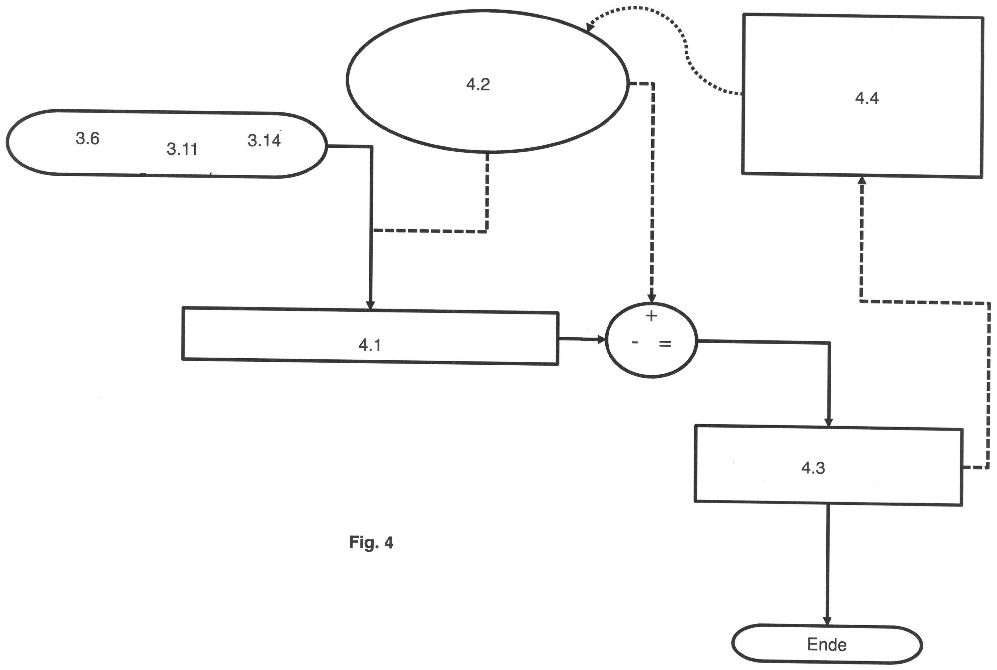

Für eine Umsetzung der Vorgaben nach Fig. 3 im Block 3.7 müssen Trenngeräteaktoren angesteuert werden. Hierzu werden gemäß Fig. 4 in der Regelung 4.1 basierend auf den Vorgaben der Blöcke 3.6, 3.11 und 3.14 trenngerätespezifische Änderungen der Betriebsparameter unter Berücksichtigung der aktuellen Einstellungen (4.2) des jeweiligen Trenngerätes ermittelt. Hierzu werden z.B. Geschwindigkeiten der Trenngerätelemente, Drehzahlen, Abstände oder Neigungen definiert. Hieraus werden im Block 4.3 Stellgrößen für die Trenngeräteaktoren der jeweiligen Trenngeräte definiert, über die die Trenngeräte eingestellt werden (Block 4.4).

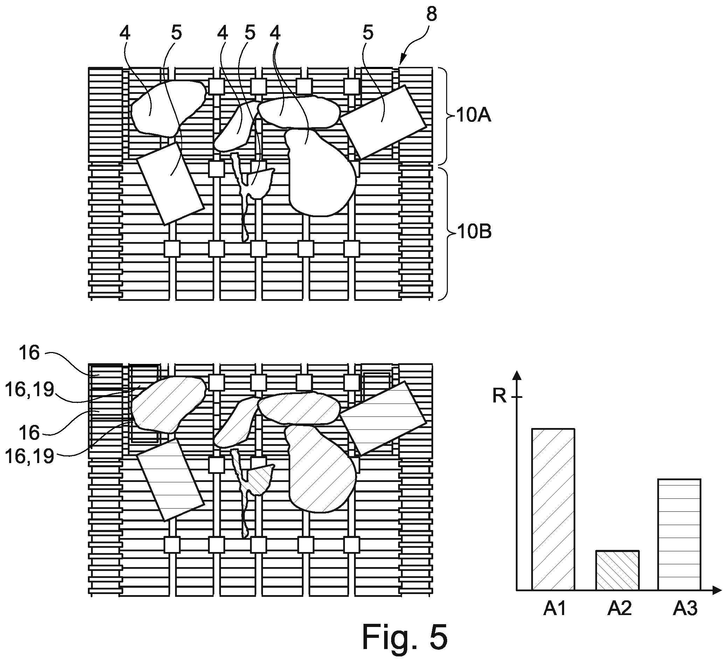

Fig. 5 zeigt exemplarisch im oberen Teil der Figur ein Prüfbild 8, welches den Übergang von einem Förderelement 10a zu einem Förderelement 10b zeigt. Auf diesem Förderstreckenbereich befinden sich Hackfrüchte 4 und Beimengen 5, die Steine und Kraut umfassen können. Gemäß den im Training des Algorithmus definierten bzw. über eine Datenbank, beispielsweise eine Tabelle mit Farbinformationen z.B. im HSV-Format, vorgegebenen Klassifizierern werden einzelne Teilbildbereiche 16 auf das Vorhandensein von gleichen Bestandteilen überprüft. So ergibt sich aufgrund der Zuordnung der jeweiligen Bildbereiche zu den einzelnen Anteilen, exemplarisch in der Fig. 5 unten links dargestellt, eine Anteilsverteilung einzelner Anteile von Hackfrüchten 4 und Beimengen 5 im Prüfbild 8. A1 zeigt somit den Anteil der Hackfrüchte 4 im Prüfbild bzw. dem entsprechenden Prüfdatensatz, A2 den Anteil von Kraut und A3 den Anteil von Steinen. Vorzugsweise erfolgt diese Zuordnung auf Basis der Farbinformationen der einzelnen Pixel, d.h. ein Bildbereich 19, der einem Anteil zugeordnet wird, ist insbesondere einer Fläche eines Pixels entsprechend. Der allgemein mit RS bezeichnete Reinigungskennwert basiert exemplarisch, gleichwohl vorzugsweise auf einer Abweichung des ersten Anteils A1 von einem Schwellenwert R, der eine optimale Anteilsverteilung von Hackfrüchten 4 auf der beobachteten Stelle der Förderstrecke indiziert. Beispielsweise wird der Reinigungskennwert RS bei einer Abweichung ≥ 50% vom Reinigungswert auf 1 gesetzt und bei einer Abweichung von < 50% vom Reinigungswert auf 0. Diese Werte werden dann entsprechend gespeichert bzw. im weiteren Programmablauf gemäß den Figuren 1 bis 4 verarbeitet.

Die erfindungsgemäße Maschine 2 ist gemäß Fig. 6 als gezogener Kartoffelroder ausgebildet, wobei eine Vielzahl von Förderelementen 10 sowie deren zugehörige Trenngeräte über einen nur teilweise bezifferten Maschinenrahmen 12 gehalten sind. Entlang der Förderstrecke sind eine Mehrzahl von Bilderfassungseinheiten 6 vorhanden, die das auf den Förderelementen 10 transportierte Erntegut umfassend Hackfrüchte 4 aufnehmen. Bei den in Fig. 6 indizierten Positionen für Bilderfassungseinheiten 6 handelt es sich um einen Übergang von einem ersten Förderelement 10 A in Form eines Siebbandes auf ein zweites Förderelement 10B in Form eines Siebbandes, welches zusätzlich von einem Grobkrautband umschlossen ist, und um den Übergang von diesem zweiten Siebband 10B auf ein weiteres Förderelement 10C umfassend ein weiteres Trenngerät. Darüber hinaus wird ausgangsseitig dieses Trenngeräts ein zum Verlesetisch führendes Förderelement 10E mit einer weiteren Bilderfassungseinheit 6 überwacht, wobei gleichzeitig ein für Reste von Beimengen 5, insbesondere Steine, vorgesehenes weiteres Förderelement 10F erfasst wird.

Eine Auswertevorrichtung kann an einer beliebigen, vorzugsweise jedoch in der Nähe des Auslesetisches befindlichen, zentral zugänglichen Stelle positioniert sein. Von der Auswertevorrichtung kann beispielsweise über ein in der Fig. 6 erkennbares Kabel 12.1 ein Fahrgeschwindigkeitssignal oder Informationen betreffend die Einstellung der Trenngeräte an ein Zugfahrzeug gegeben werden.

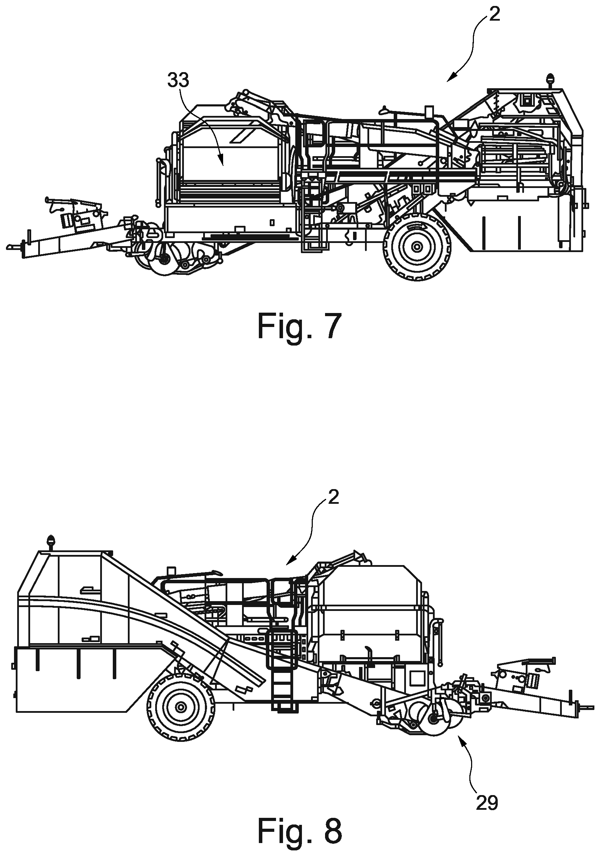

Die in den Fig. 7 und 8 in der Seitenansicht dargestellte Maschine ist an weiteren Positionen mit optischen Bilderfassungseinheiten 6 versehbar. So können zusätzlich unmittelbar im Bereich einer Rodevorrichtung 29 oder einer zu einem Bunker 33 führenden Fallstufe weitere Bilderfassungseinheiten angeordnet sein.

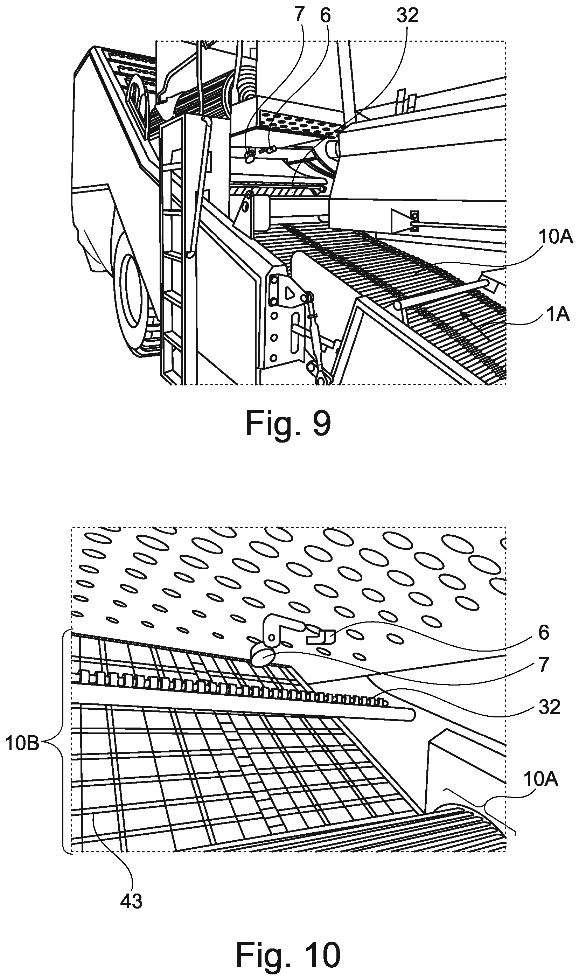

Die Fig. 9 und 10 zeigen die Anordnung einer oberhalb einer ersten Fallstufe zwischen einem Förderelement 10A und einem Förderelement 10B rahmenseitig angeordneten optischen Bilderfassungseinheit 6, deren Blickfeld nach unten gerichtet ist. Eine Lichtquelle 7 sorgt für eine Ausleuchtung des Blickfeldes zur Erfassung eines ausreichend beleuchteten Prüfbildes 8. Das Förderelement 10A ist ein Siebband, welches von einer Rodevorrichtung 29 kommend bereits einen Teil von Beimengen 5 insbesondere Erde und/oder Kluten absiebt und über eine Fallstufe auf ein weiteres, als Siebband ausgebildetes Förderelement 10B übergibt. Dieses Förderelement 10B weist zusätzlich ein Grobkrautband auf, welches zum Abtrennen des an den Kartoffeln oder im Erntegut vorhandenen Krauts vorgesehen ist. Entsprechend sind Abstreifvorrichtungen 32 über die Breite des Förderelements 10B angeordnet.

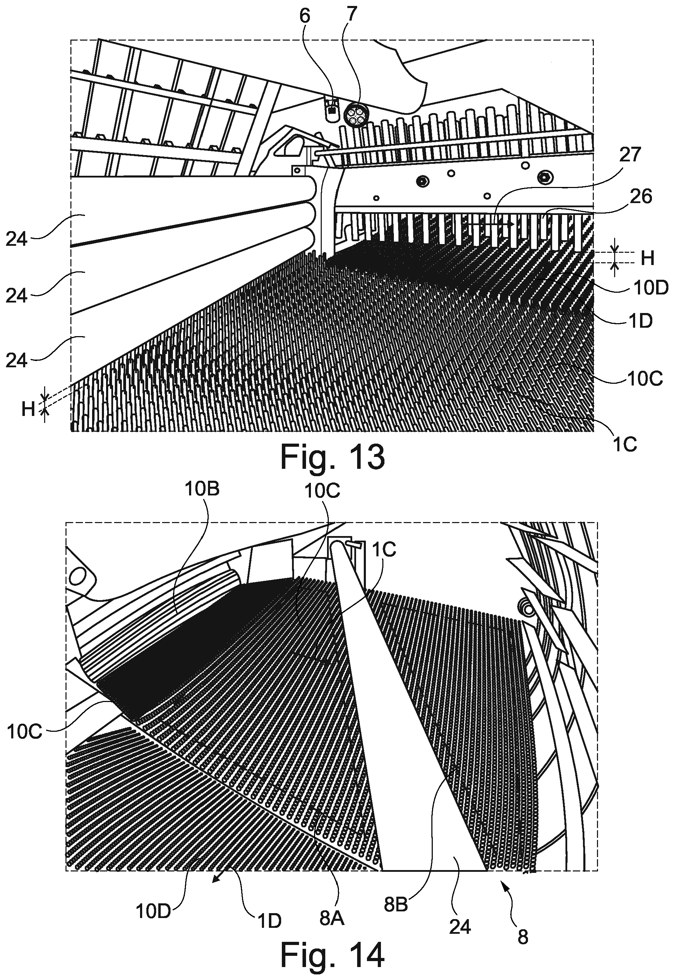

Eine Höhe H der Abstreifvorrichtung 32 über der Förderebene des Förderelements 10B ist mittels des Trenngeräteeinstellsignals einstellbar. Dies stellt eine Möglichkeit dar, die Trennleistung des als Krautband ausgebildeten Trenngeräts zu beeinflussen. Darüber hinaus kann eine Relativgeschwindigkeit von Siebband zu Grobkrautband 43 einstellbar sein. In der Fig. 10 ist zu Zwecken der Übersichtlichkeit lediglich das Grobkrautband 43 und nicht das eigentliche, in Form eines Siebbandes ausgebildete Förderelement 10B dargestellt (vgl. Fig. 14).

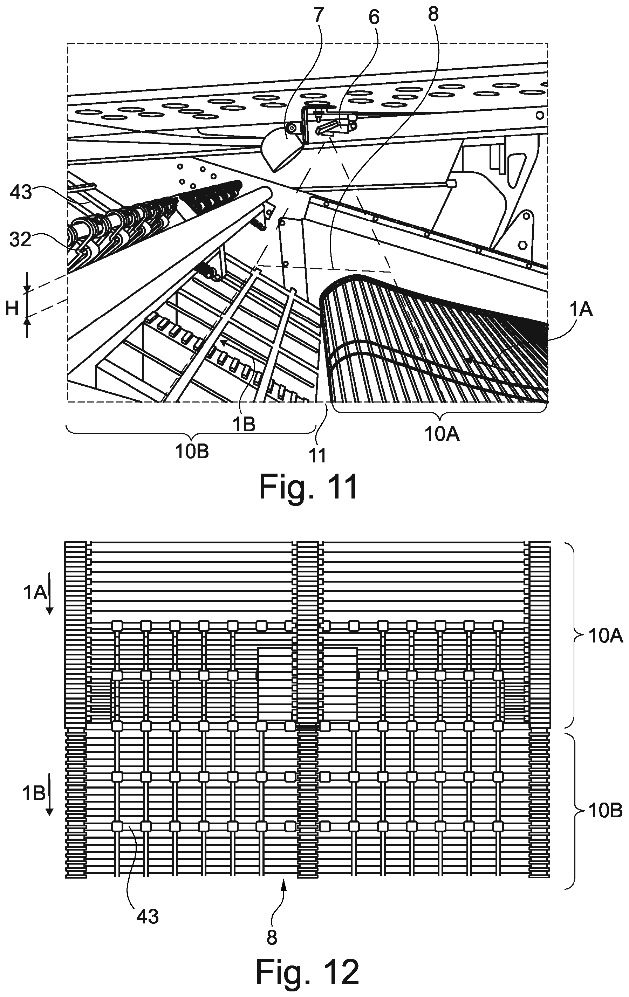

Ein sich aus dem in der Fig. 11 gestrichelt dargestellten Blickfeld der optischen Bilderfassungseinheit 6 ergebenes Prüfbild 8 ist in der Fig. 12 im Detail dargestellt. Anhand eines aus diesem Prüfbild 8 geschaffenen oder durch dieses ausgebildeten Prüfdatensatzes werden die vorstehend beschriebenen Auswertungen auf Basis der Abweichungen der Anteile der erfassten und klassifizierten Objekte von den Schwellenwerten R vorgenommen.

Ausgehend von dem Förderelement 10B wird das noch vorhandene Erntegut auf ein weiteres Förderelement 10C mit einer Förderrichtung 1C übergeben. Diesem ist ein Trenngerät in Form von mehreren übereinanderstehenden, rotierenden Umlenkwalzen 24 zugeordnet. Über einen von diesem ausgeübten Impuls wird das Erntegut in Richtung des Förderelementes 10D transportiert (Fig. 13).

Eine Abstand H zwischen Förderelement 10C und der unteren Umlenkwalze 24 ist zwecks Variation einer Trennleistung einstellbar und stellt damit den einstellbaren Betriebsparameter dar. Ggfs. sind weitere Abstände zwischen den einzelnen Umlenkwalzen 24 zwecks Intensität der Umlenkung bzw. einer etwaigen Trennfunktion, bei der Kraut zwischen den Umlenkwalzen 24 eingezogen wird, hinsichtlich des Abstands voneinander variierbar. Alternativ oder ergänzend ergibt sich eine Variation der Trennleistung bzw. Umlenkung aus der Einstellbarkeit der Umlaufgeschwindigkeiten der Umlenkwalzen 24.

Ebenfalls ist eine Höhe H der unteren Enden von Fingern 26 eines als Fingerband 26.1 ausgebildeten Trenngerätes, welches zum Förderelement 10D gehört, als einer von mehreren Betriebsparametern einstellbar. Die Höhe H beschreibt den Abstand der Finger 26 von der Oberkante des als Igelband ausgebildeten Förderelementes. Darüber hinaus kann ein Anstellwinkel des Fingerbandes 26.1 zu einer Senkrechten zur Förderebene des Förderelementes einstellbar ausgestaltet sein. Gleiches gilt für die Umlaufgeschwindigkeit des Finderbandes 26.1.

Die in der Fig. 13 dargestellte Bilderfassungseinheit 6 erzeugt das in Fig. 14 dargestellte Prüfbild 8, bei dem über eine Filterung bzw. Maskierung ein im vorliegenden Ausführungsbeispiel relevanter Prüfbildteil 8A definiert wird. Für eine Überwachung einer Trenngeräteleistung, vorliegend einer Trennleistung der Umlenkwalzen 24 kann zusätzlich noch ein Prüfbildteil 8B, der aus einer Förderrichtung 1C heraus betrachtet hinter den Umlenkwalzen 24 liegt, ausgewählt werden. Insbesondere wird für die Trenngeräteeinstellung der Bereich vor den Umlenkwalzen 24 überwacht. Der Prüfdatensatz ergibt sich dann aus dem entsprechenden Prüfbildteil 8A.

Sofern ein zugehöriger Reinigungskennwert RS für den Prüfbildteil 8A eine zu geringe Trennleistung eines vorgeordneten oder dargestellten Trenngerätes ergibt, kann das Trenngerät aggressiver eingestellt werden. Alternativ kann für den Fall, dass der Reinigungskennwert im Prüfbildteil 8B eine zu große Trennleistung indiziert, beispielsweise aufgrund von zu großen Anteilen von Beimengen 5 in Form von Kluten hinter den Umlenkwalzen 24, die zumindest noch teilweise zur Kartoffelschonung auf der nachfolgenden Förderstrecke benötigt werden, ein Abstand H der Umlenkwalzen 24 vom Förderelement 10 verringert werden und das Trenngerät damit weniger aggressiv eingestellt werden.

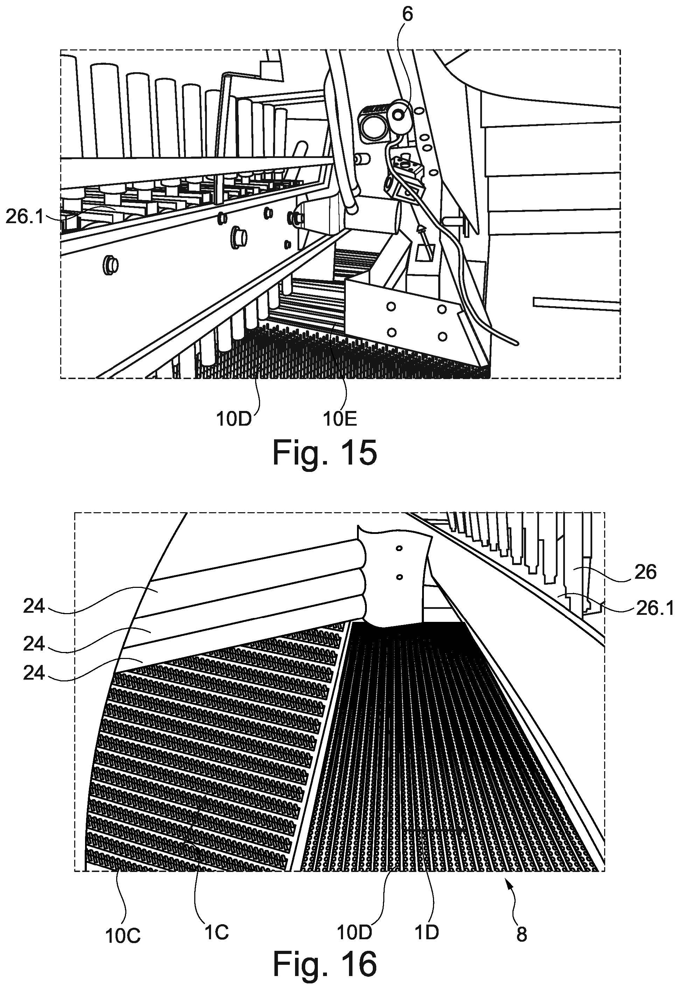

Eine weitere in dem Bereich der Förderbänder 10C und 10D angeordnete optische Bilderfassungseinheit 6 ist in Fig. 15 und Fig. 16 dargestellt. Diese Bilderfassungseinheit 6 kann ergänzend oder alternativ zu der Bilderfassungseinheit 6 nach Fig. 6 verwendet werden. Insbesondere dient sie dazu, die Wirkung des durch die Umlenkwalzen 24 ausgebildeten Trenn- und Umlenkgerätes zu überwachen. Auch dieser Überwachungseinheit ist eine Lichtquelle 7 zur besseren Ausleuchtung des überwachten Bereiches zugeordnet.

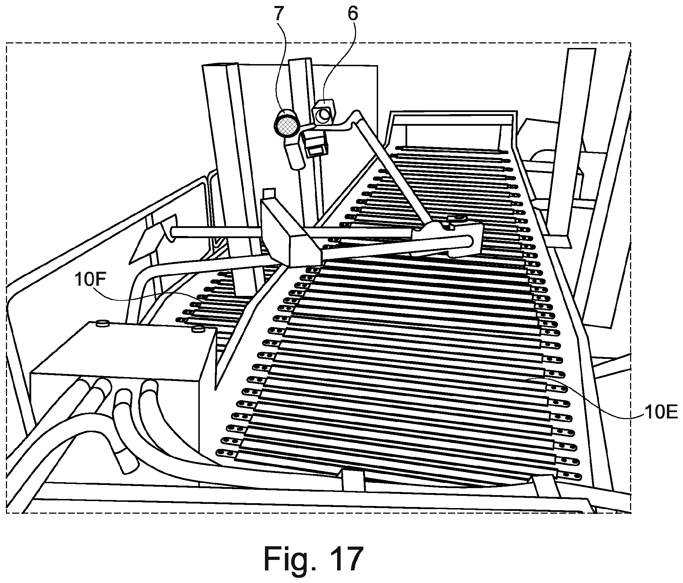

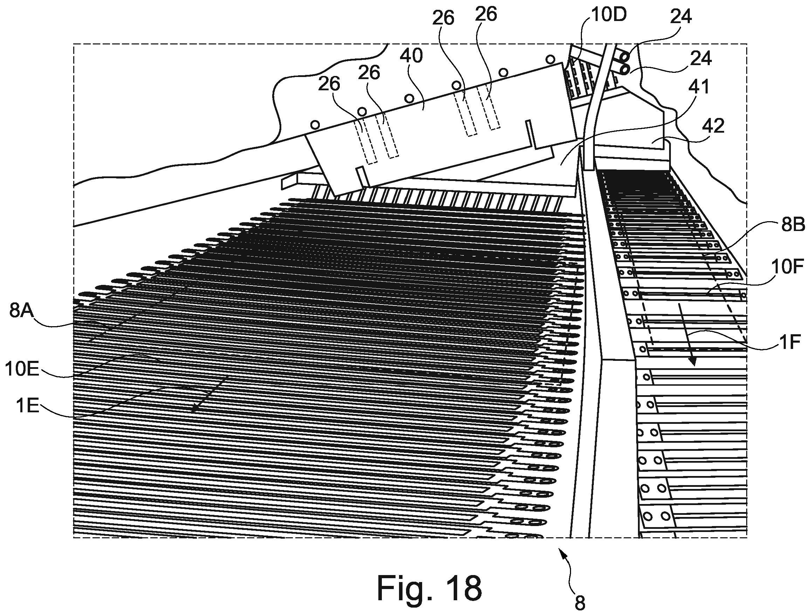

Eine weitere optische Bilderfassungseinheit 6 ist mit einer zugehörigen Lichtquelle 7 oberhalb eines Verlesetisches mit Blick auf ein Förderelement 10E und ein Förderelement 10F angeordnet (Fig. 17). Mittels Maskierung werden die im Prüfbild 8 gemäß Fig. 18 abgebildeten Prüfbildteile 8A und 8B selektiert, die einerseits als einen Förderpfad das Förderelement 10E mit Förderrichtung 1E zum Abtransport von Hackfrüchten 4 und andererseits als weiteren Förderpfad das Förderelement 10F mit Förderrichtung 1F zum Abtransport von Beimengen 5 in Form von Steinen und/oder Kluten überwachen. Mittels der vorbeschriebenen Auswertung wird überprüft, ob die Anteile von Hackfrüchten 4 auf dem Förderelement 10F zu groß sind. Sollte dies der Fall sein, wird mittels des erfindungsgemäßen Verfahrens das vorgeschaltete Trenngerät schärfer eingestellt. Dieses Trenngerät befindet sich oberhalb des als Igelband ausgebildeten Förderelements 10D und ist insbesondere als Fingerband mit exemplarisch und gestrichelt dargestellten Fingern 26 versehen, gleichwohl in der gezeigten Abbildung hinter der davor befindlichen Abdeckung 40 angeordnet. Beispielsweise wird der Abstand der Finger 26 von dem Förderelement 10D verringert, um mehr Erntegut in Form von Hackfrüchten 4 auf das Förderelement 10E über eine zugehörige Rutsche 41 abzufördern. Sofern zu viele Beimengen 5 in Form von Steinen und/oder Kluten auf dem Förderelement 10E erkannt werden, kann beispielsweise die Umlaufgeschwindigkeit von Umlenkwalzen 24 reduziert werden, damit ein auf Beimengen 5 ausgeübter geringerer Impuls zu einer besseren Umlenkung etwaiger Steine in Richtung des Förderelements 10F erfolgt. Beimengen 5 rutschen dann über eine Rutsche 42 verbessert auf das Förderelement 10F.

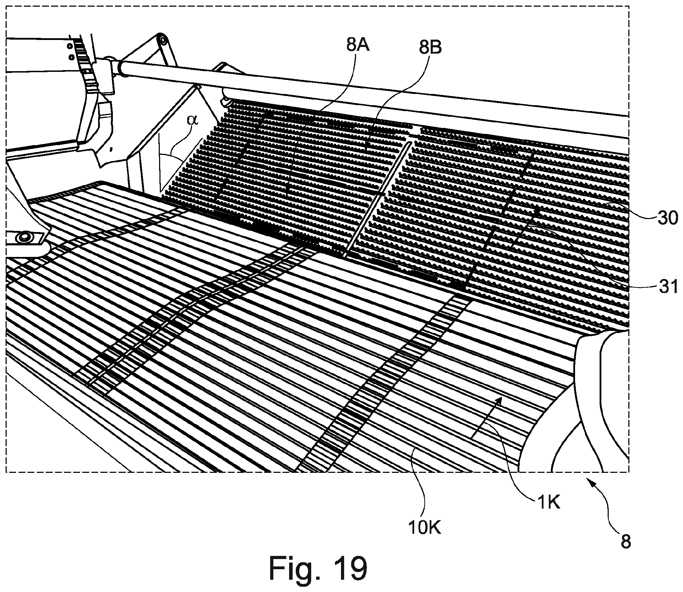

Fig. 19 veranschaulicht die Anwendung des erfindungsgemäßen Verfahrens bei einem weiteren Trenngerät, vorliegend in Form eines Feinkrautelevators. Entsprechend zeigt das in der Fig. 19 dargestellte Prüfbild 8 ein anförderndes Förderelement 10K mit einer Förderrichtung 1K, welches über eine Fallstufe auf ein als Feinkrautelevator ausgebildetes Trenngerät mit einem Krautband 30 führt. Dieses transportiert in Richtung 31 etwaiges im Erntegutstrom vorhandenes Feinkraut weiter, während Kartoffeln und schwerere Beimengen des Erntegutstroms, die auf dem Krautband 30 landen, aufgrund der über einen einstellbaren Winkel α vorgebbaren Schräglage des Krautbandes 30 zurück in den Spalt zwischen Förderelement 10K und Feinkrautelevator fallen. Sofern in Prüfbildteilen 8A und 8B die Anteile von Hackfrüchten 4 bzw. Beimengen 5 außerhalb der Referenzwerte liegen, kann beispielsweise durch eine Einstellung des Anstellwinkels α oder durch eine Umlaufgeschwindigkeitsänderung des Krautbandes 30 das Trenngerät aggressiver oder entsprechend weniger aggressiv eingestellt werden, um so auf die gewünschte Trennleistung zu kommen.

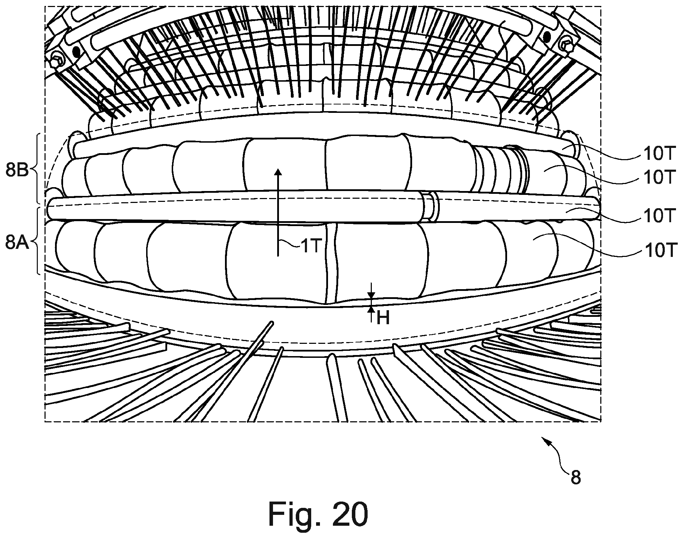

Beim vorzugsweise im Bereich der Lagertechnik eingesetzten Walzenenterder gemäß Fig. 20 ist der Abstand H zwischen einzelnen Förderelementen 10T einstellbar ausgebildet. Das Förderelement bildet 10T somit das Trenngerät direkt mit aus. In den einzelnen Prüfbildteilen 8A und 8B des Prüfbildes 8 wird vorzugsweise der Beimengenanteil berechnet und für die Einstellung der Trenngeräteleistung verwendet. Hierbei wird wie vorstehend beschrieben eine Perspektivenbereinigung aufgrund der "fish-eye"-Darstellung der Bilderfassungseinheit 6 vorgenommen.

Weitere alternative Ausführungsbeispiele der Erfindung können z.B. als selbstfahrende Rübenroder oder als Reinigungsstrecke in der Kartoffel- oder Rübenlagertechnik ausgebildet sein.

## Patentansprüche

1. Verfahren zur Regelung des Betriebs einer Maschine (2) zum Ernten von Hackfrüchten (4) und/oder zum Trennen von Hackfrüchten (4) von weiterem Erntegut umfassend Beimengen, bei dem durch mindestens eine optische Bilderfassungseinheit (6) zumindest ein Prüfbild (8) von zumindest einem mittels zumindest eines Förderelementes (10,10A,10B,10C,10D,10E,10F,10K,10T) relativ zu einem Maschinenrahmen (12) fortbewegten Teil des Erntegutes aufgenommen wird, **dadurch gekennzeichnet, dass** eine Auswertevorrichtung auf Basis eines anhand des Prüfbildes (8) erzeugten oder durch dieses ausgebildeten Prüfdatensatzes ein Trenngeräteeinstellsignal zur Einstellung zumindest eines Betriebsparameters eines Trenngerätes der Maschine (2) erzeugt.

2. Verfahren nach Anspruch 1, **dadurch gekennzeichnet, dass** die Auswertevorrichtung die Prüfdatensätze lokal auf der Maschine (2) oder einem unmittelbar angebundenen Zugfahrzeug auswertet.

3. Verfahren nach Anspruch 1 oder 2, **dadurch gekennzeichnet, dass** die Auswertevorrichtung zumindest einen von zumindest einem Bildbereich (19) gebildeten, ersten Anteil (A1) des Prüfbildes (8) berechnet, wobei der zumindest eine Bildbereich (19) zumindest teilweise einen definierten Bestandteil des Erntegutes oder der Maschine (2) abbildet, wobei auf Basis des ersten Anteils (A1) insbesondere ein Reinigungskennwert (14) berechnet wird.

4. Verfahren nach Anspruch 3, **dadurch gekennzeichnet, dass** der zumindest eine den ersten Anteil (A1) bildende Bildbereich (19) vorzugsweise auf Basis von einem anhand des Bildbereiches (19) erzeugten Prüfunterdatensatz, insbesondere zumindest einer davon umfassten Farbinformation, als den definierten Bestandteil des Erntegutes oder Maschine (2) zeigend identifiziert wird.

5. Verfahren nach Anspruch 3 oder 4, **dadurch gekennzeichnet, dass** der Prüfunterdatensatz, insbesondere wenigstens ein davon umfasster Prüfwert, vorzugsweise die Farbinformation, durch ein insbesondere modellbasiertes, statistisches Klassifizierungsverfahren klassifiziert wird und ein Bildbereich (19) insbesondere dann dem ersten Anteil (A1) zugerechnet wird, wenn das Ergebnis des Klassifizierungsverfahrens dem definierten Bestandteil des Erntegutes bzw. der Maschine (2) zugeordnet wird.

6. Verfahren nach einem der Ansprüche 3 bis 5, **dadurch gekennzeichnet, dass** der wenigstens eine Prüfwert des Prüfunterdatensatzes, insbesondere die Farbinformation, mit zumindest einem Referenzwert (R) verglichen wird und ein Bildbereich (19) insbesondere dann dem ersten Anteil (A1) zugerechnet wird, wenn zumindest der wenigstens eine Prüfwert des Prüfunterdatensatzes innerhalb eines zugeordneten Referenzwertbereichs liegt.

7. Verfahren nach Anspruch 5 oder 6, **dadurch gekennzeichnet, dass** die Auswertevorrichtung bei Eingabe exemplarischer, dem ersten Anteil (A1) zuzurechnender Bildbereiche (19) eines Referenzbildes ein dem Klassifizierungsverfahren zugrundeliegendes Modell automatisch weiterentwickelt und/oder den zumindest einen Referenzwertbereich automatisch berechnet oder verändert.

8. Verfahren nach einem der Ansprüche 3 bis 7, **dadurch gekennzeichnet, dass** unterschiedliche Bildbereiche (19) bei der Berechnung des ersten Anteils (A1) unterschiedlich gewichtet werden.

9. Verfahren nach einem der Ansprüche 3 bis 8, **dadurch gekennzeichnet, dass** das gesamte Prüfbild (8) oder ein zusammenhängender Prüfbildteil (8A) in Teilbildbereiche (16) eingeteilt ist, welche insbesondere jeweils die gleiche Anzahl an Pixeln des Prüfbildes (8), bevorzugt genau einen Pixel, umfassen.

10. Verfahren nach einem der Ansprüche 3 bis 9, **dadurch gekennzeichnet, dass** das Prüfbild (8) mehrere Prüfbildteile (8A, 8B) umfasst, für die die Auswertevorrichtung jeweils einen ersten Anteil (A1), insbesondere mehrere Anteile (A1, A2, A3) an Bildbereichen (19) berechnet, wobei vorzugsweise die Prüfbildteile (8A, 8B) Erntegut unterschiedlicher von einem Trenngerät abfördernder Förderelemente abbilden.

11. Verfahren nach einem der Ansprüche 3 bis 10, **dadurch gekennzeichnet, dass** die den ersten Anteil (A1) bildenden Bildbereiche (19) Hackfrüchte (4) oder Teile davon zeigen und einen zweiten Anteil (A2) bildende Bildbereiche Beimengen (5) oder Teile davon zeigen.

12. Verfahren nach einem der Ansprüche 3 bis 11, **dadurch gekennzeichnet, dass** der Reinigungskennwert (14) mittels einer von der Auswertevorrichtung berechneten Abweichung des ersten Anteils (A1) von einem Schwellenwert (R) bestimmt wird.

13. Verfahren nach einem der vorhergehenden Ansprüche 3 bis 12, **dadurch gekennzeichnet, dass** das Trenngeräteeinstellsignal anhand einer Mehrzahl von insbesondere zeitlich nacheinander berechneten Reinigungskennwerten (RS) berechnet wird oder zumindest ein zuvor berechneter Reinigungskennwert (RS) in die Berechnung des Reinigungskennwertes (RS) einfließt.

14. Verfahren nach einem der vorherigen Ansprüche mit zumindest zwei Bilderfassungseinheiten (6) und zumindest zwei Förderelementen (10), **dadurch gekennzeichnet, dass** die erste Bilderfassungseinheit (6) ein erstes Prüfbild eines von einem Trenngerät mittels des ersten Förderelements (6) abgeförderten Erntegutteils aufgenommen wird, die zweite Bilderfassungseinheit (6) ein weiteres Prüfbild eines von dem Trenngerät mittels des zweiten Förderelements (6) abgeförderten Erntegutteils aufgenommen wird und das Trenngeräteeinstellsignal auf Basis zumindest einer der beiden durch die beiden Prüfbilder ausgebildeten oder auf Basis dieser erzeugten Prüfdatensätze erzeugt wird.

15. Verfahren nach einem der vorhergehenden Ansprüche, **dadurch gekennzeichnet, dass** zumindest ein weiterer Sensor, insbesondere ein Ultraschall- oder Tastsensor, zur Messung einer Erntegut-Schichtdicke auf dem Förderelement, einen Sensor zur Messung der Antriebsleistung, ein Feuchtesensor und/oder ein Drehzahlsensor, Sensordaten an die Auswertevorrichtung übermittelt, die in die Berechnung des Trenngeräteeinstellsignal einfließen.

16. Verfahren nach einem der vorhergehenden Ansprüche, **dadurch gekennzeichnet, dass** die Auswertevorrichtung mittels unterschiedlicher Trenngeräteeinstellsignale entweder eine Erhöhung oder eine Verringerung des Betriebsparameters auslöst.

17. Verfahren nach Anspruch 16, **dadurch gekennzeichnet, dass** nach dem Auslösen einer Betriebsparameteränderung für einen definierten Zeitraum oder eine definierte Förderstrecke des Förderelementes (10,10A,10B,10C,10D,10E, 10F,10K,10T) keine weitere Betriebsparameteränderung ausgelöst wird.

18. Verfahren nach einem der vorhergehenden Ansprüche, **dadurch gekennzeichnet, dass** der Betriebsparameter ein Abstand (H) zweier Förderelemente (10T) zueinander, eines Trennelementes (32) oder des Trenngerätes zu dem oder einem weiteren Förderelement (10C) ist.

19. Verfahren nach einem der vorhergehenden Ansprüche, **dadurch gekennzeichnet, dass** der Betriebsparameter eine Trenngeschwindigkeit, insbesondere eine Umlauf- oder Rotationsgeschwindigkeit, eines Trennelementes (24, 26, 30) oder des Trenngerätes ist.

20. Verfahren nach einem der vorhergehenden Ansprüche, **dadurch gekennzeichnet, dass** der Betriebsparameter ein Anstellwinkel (α) des Förderelementes (10) oder des Trenngerätes ist.

21. Verfahren nach einem der vorhergehenden Ansprüche, **dadurch gekennzeichnet, dass** der Betriebsparameter eine Motorleistung und/oder ein Anstellwinkel eines zugehörigen Aggregates ist.

22. Verfahren nach einem der vorhergehenden Ansprüche, **dadurch gekennzeichnet, dass** das Trenngeräteinstellsignal drahtgebunden, insbesondere mittels CAN-Bus oder Ethernet, oder drahtlos an ein Trenngerätsteuergerät übermittelt wird, wobei vorzugsweise die Trenngeräteeinstellung vorab von einer Bedienperson über eine Eingabe an einer Schnittstelle freizugeben ist.

23. Verfahren nach einem der vorhergehenden Ansprüche, **dadurch gekennzeichnet, dass** das Trenngeräteinstellsignal und/oder der Betriebsparameter für eine Bedienperson abgebildet und/oder automatisch zur Einstellung des Betriebsparameters verwendet wird.

24. Verfahren nach einem der vorhergehenden Ansprüche, **dadurch gekennzeichnet, dass** die optischen Bilderfassungseinheiten lediglich 1D- oder 2D-Informationen erfassen.

25. Maschine (2) zum Ernten von Hackfrüchten (4) und/oder zum Trennen von Hackfrüchten (4) von weiterem Erntegut, die zumindest einen Maschinenrahmen (12), ein Förderelement (10), eine Bilderfassungseinheit (6), ein Trenngerät und eine Auswertevorrichtung aufweist und zur Ausführung des Verfahrens nach einem der vorhergehenden Ansprüche ausgebildet ist.

26. Maschine (2) nach Anspruch 24, **dadurch gekennzeichnet, dass** die Auswertevorrichtung eine graphische Prozessoreinheit, insbesondere eine GPGPU, und/oder eine FPGA-basierte Prozessoreinheit umfasst.

27. Maschine (2) nach Anspruch 25 oder 26, **gekennzeichnet durch** zumindest einen mit der Auswertevorrichtung gekoppelten Sensor, insbesondere einen Ultraschall- oder Tastsensor zur Messung einer Erntegut-Schichtdicke auf dem Förderelement (10), einen Sensor zur Messung einer Antriebsleistung, einen an einem Förderelement (10) angeordneten Drehzahlsensor und/oder einen Feuchtesensor.

28. Maschine (2) nach einem der Ansprüche 25 bis 27, **gekennzeichnet durch** mehrere im Betrieb jeweils zumindest ein Prüfbild (8) von demselben Förderelement (10) oder von demselben Trenngerät oder von unterschiedlichen, insbesondere von einem selben Trenngerät abfördernden, Förderelementen (10) oder Trenngeräten aufnehmende Bilderfassungseinheiten (6).

29. Maschine (2) nach einem der Ansprüche 25 bis 28, dass die Bilderfassungseinheit (6) so angeordnet ist, dass im Betrieb das Prüfbild (8) zumindest zwei durch zumindest ein Trennelement (24, 32) getrennte Förderelementabschnitte jeweils zumindest teilweise abbildet.

30. Maschine (2) nach einem der Ansprüche 25 bis 29, **dadurch gekennzeichnet, dass** die Bilderfassungseinheit (6) derart angeordnet ist, dass das Prüfbild (8) zumindest zwei alternative Förderpfade ausbildende Förderelemente (10) der Maschine (2) für unterschiedliche Erntegutbestandteile, insbesondere einen Förderpfad für Hackfrüchte (4) und eine Förderpfad für Beimengen, zeigt.

31. Maschine (2) nach einem der Ansprüche 25 bis 29, **dadurch gekennzeichnet, dass** das Förderelement (10) als Siebband (10A, 10B, 10E) oder als Igelband (10C, 10D), das im Betrieb insbesondere unter zumindest einer sich quer über das Förderelement (10) erstreckenden und Erntegut davon umlenkenden Umlenkwalze (24) verläuft, oder als Siebstern (10P, 10Q, 10S) oder als Förderwalze (10T), insbesondere umfasst von einem Walzentisch (10M), oder als Rodeschar ausgebildet ist.
